(19) Europäisches Patentamt
European Patent Office
Office européen des brevets

(11) **EP 4 478 647 A1**

(12) **EUROPEAN PATENT APPLICATION**
published in accordance with Art. 153(4) EPC

(43) Date of publication:
**18.12.2024 Bulletin 2024/51**

(21) Application number: **23778314.7**

(22) Date of filing: **29.03.2023**

(51) International Patent Classification (IPC):
**H04L 5/00** $^{(2006.01)}$

(52) Cooperative Patent Classification (CPC):
**H04L 5/00**

(86) International application number:
**PCT/CN2023/084805**

(87) International publication number:
**WO 2023/185949 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.03.2022 CN 202210330405**

(71) Applicant: **Huawei Technologies Co., Ltd.
Shenzhen, Guangdong 518129 (CN)**

(72) Inventors:
• **XU, Chen
Shenzhen, Guangdong 518129 (CN)**
• **ZHANG, Gongzheng
Shenzhen, Guangdong 518129 (CN)**
• **LI, Rong
Shenzhen, Guangdong 518129 (CN)**
• **YAN, Min
Shenzhen, Guangdong 518129 (CN)**
• **DU, Yinggang
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **COMMUNICATION METHOD AND COMMUNICATION APPARATUS**

(57) Embodiments of this application disclose a communication method and a communication apparatus. The method includes: A first communication apparatus generates a first signal based on a first symbol, where the first symbol is obtained by performing superposition processing on a second symbol and a third symbol, and the second symbol is a modulated data symbol. The first communication apparatus sends the first signal, where the first signal is obtained by performing physical resource mapping on the first symbol. In embodiments of this application, the signal obtained by performing physical resource mapping on the symbol is sent, where the symbol is obtained by performing superposition processing on the data symbol and the third symbol, so that a throughput can be increased, and a transmit power can be reduced.

FIG. 3

## Description

This application claims priority to Chinese Patent Application No. 202210330405.6, filed with the China National Intellectual Property Administration on March 31, 2021 and entitled "COMMUNICATION METHOD AND COMMUNICATION APPARATUS", which is incorporated herein by reference in its entirety.

## TECHNICAL FIELD

This application relates to the communication field, and in particular, to a communication method and a communication apparatus.

## BACKGROUND

An artificial intelligence (artificial intelligence, AI) technology is successfully applied in the field of image processing and natural language processing. The increasingly mature AI technology plays an important role in promoting evolution of mobile communication network technologies. For example, the AI technology is applied to a network layer (for example, network optimization, mobility management, and resource allocation) and a physical layer (for example, channel encoding/decoding, channel prediction, and a receiver). When the AI technology is combined with a wireless communication system, how to design more efficient communication solutions is currently an important topic of current research.

## SUMMARY

Embodiments of this application disclose a communication method and a communication apparatus, to improve a throughput of a wireless communication system.

According to a first aspect, an embodiment of this application provides a communication method. The method includes: A first communication apparatus generates a first signal based on a first symbol, where the first symbol is obtained by performing superposition processing on a second symbol and a third symbol, and the second symbol is a modulated data symbol. The first communication apparatus sends the first signal, where the first signal is obtained by performing physical resource mapping on the first symbol.

In this embodiment of this application, a first symbol is obtained by performing superposition processing on the second symbol and a third symbol, and the first signal generated by using the first symbol is sent, so that a throughput can be improved.

In a possible implementation, the first symbol includes a symbol obtained by performing superposition processing on the second symbol and the third symbol and a symbol obtained by performing superposition processing on other symbols.

In this implementation, the first symbol includes the symbol obtained by performing superposition processing on the second symbol and the third symbol and the symbol obtained by performing superposition processing on the other symbols; and the first signal generated by using the first symbol is sent, so that a throughput can be further improved.

In a possible implementation, the first symbol includes H symbols, each of the H symbols corresponds to one time-frequency resource, at least one of the H symbols is obtained by performing superposition processing on one modulated data symbol and one pilot symbol, the third symbol is a pilot symbol, and H is an integer greater than 1. For example, the first communication apparatus is to send H modulated data symbols, each of H symbols included in the first symbol is obtained by performing superposition processing on one modulated data symbol and one pilot symbol, and the H symbols are in one-to-one correspondence with the H modulated data symbols.

In this implementation, each of the H symbols included in the first symbol is obtained by performing superposition processing on one modulated data symbol and one pilot symbol; and the first signal generated by using the first symbol is sent, so that a throughput can be improved.

In a possible implementation, the first symbol is obtained by performing power superposition on the second symbol and the third symbol.

In this implementation, the first symbol is obtained by performing power superposition on the second symbol and the third symbol. When a transmit power remains unchanged, a throughput can be improved.

In a possible implementation, the first symbol is obtained by performing power superposition on the second symbol and the third symbol based on a first power allocation matrix, where the first power allocation matrix indicates a power proportion of the second symbol and/or a power proportion of the third symbol.

In this implementation, the first symbol is obtained by performing power superposition on the second symbol and the third symbol based on the first power allocation matrix; and the power proportion of the second symbol may be configured based on an actual requirement, so that a receiver obtains the second symbol based on the first symbol.

In a possible implementation, before that the first communication apparatus sends the first signal, the method further includes: The first communication apparatus sends first indication information to a second communication apparatus, where the first indication information indicates the first power allocation matrix. That the first communication apparatus sends the first signal includes: The first communication apparatus sends the first signal to the second communication apparatus.

In this implementation, the first communication apparatus sends the first indication information to the second communication apparatus, so that the second communication apparatus receives, by using the first power allocation matrix, the signal generated by the first communication apparatus by performing power superposition on the two symbols based on the first power allocation matrix.

In a possible implementation, before that the first communication apparatus sends the first signal, the method further includes: The first communication apparatus sends pilot indication information to the second communication apparatus, where the pilot indication information indicates a pilot sequence or a pilot symbol matrix, and the pilot sequence or the pilot symbol matrix is used by the second communication apparatus to receive the first signal. The pilot sequence or the pilot symbol matrix includes a plurality of pilot symbols.

In this implementation, the first communication apparatus sends the pilot indication information to the second communication apparatus, so that the second communication apparatus accurately obtains the pilot sequence or the pilot symbol matrix based on the pilot indication information, and further receives the signal from the first communication apparatus by using the pilot sequence or the pilot symbol matrix.

In a possible implementation, the pilot indication information includes an identifier of the pilot sequence or an identifier of the pilot symbol matrix.

In this implementation, the pilot indication information includes the identifier of the pilot sequence or the identifier of the pilot symbol matrix. The pilot sequence may be accurately indicated by using the identifier of the pilot sequence, contributing to fewer signaling overheads. Alternatively, the pilot symbol matrix may be accurately indicated by using the identifier of the pilot symbol matrix, contributing to fewer signaling overheads.

In a possible implementation, before that the first communication apparatus sends the first signal, the method further includes: The first communication apparatus receives second indication information from a second communication apparatus, where the second indication information indicates the first power allocation matrix. The first communication apparatus is a terminal, and the second communication apparatus is an access network device.

In this implementation, the first communication apparatus receives the second indication information from the second communication apparatus, to quickly and accurately determine the first power allocation matrix based on the second indication information.

In a possible implementation, before that the first communication apparatus sends the first signal, the method further includes: The first communication apparatus receives pilot indication information from the second communication apparatus, where the pilot indication information indicates a pilot sequence or a pilot symbol matrix, and the pilot sequence or the pilot symbol matrix is used by the first communication apparatus to generate the first signal.

In this implementation, the first communication apparatus receives the pilot indication information from the second communication apparatus, so that the pilot sequence or the pilot symbol matrix is accurately obtained based on the pilot indication information, and the to-be-sent signal is further generated by using the pilot sequence or the pilot symbol matrix.

In a possible implementation, the first indication information includes information used to generate the first power allocation matrix.

In this implementation, the first indication information includes the information used to generate the first power allocation matrix, so that the second communication apparatus can quickly and accurately generate the first power allocation matrix based on the first indication information.

In a possible implementation, a value of an element corresponding to a pilot symbol in the first power allocation matrix is 0 or a first power proportion, where the first indication information includes the first power proportion, a start location and a spacing of a subcarrier, and a start location and a spacing of the symbol.

In this implementation, the first indication information includes the first power proportion, the start location and the spacing of the subcarrier, and the start location and the spacing of the symbol. Because the complete first power allocation matrix does not need to be sent, overheads for transmitting the first power allocation matrix are reduced.

In a possible implementation, the method further includes: The first communication apparatus sends a second signal, where the second signal is obtained by performing physical resource mapping on a fourth symbol, the fourth symbol includes a fifth symbol and a sixth symbol, the fourth symbol is obtained by performing power superposition on a plurality of symbols based on a second power allocation matrix, and the second power allocation matrix is different from the first power allocation matrix.

In this implementation, the first communication apparatus generates the first symbol based on the first power allocation matrix, and generates the fourth symbol based on the second power allocation matrix; and this manner of generating the symbol by the first communication apparatus may be compatible with an existing manner of generating the symbol. In addition, the first communication apparatus sends the first signal to the second communication apparatus, so that a throughput can be increased, and a transmit power of the pilot symbol can be reduced.

In a possible implementation, the fifth symbol is a modulated data symbol, the sixth symbol is a pilot symbol, and an element corresponding to the sixth symbol in the second power allocation matrix is 1.

In this implementation, the element corresponding to the sixth symbol in the second power allocation matrix is 1, and the symbol generated by performing power superposition on the plurality of symbols based on the second power allocation matrix is the same as the existing symbol, so that high compatibility is implemented.

In a possible implementation, the third symbol is a pilot symbol.

In this implementation, the third symbol is the pilot symbol, and the first symbol is obtained by performing superposition processing on the modulated data symbol and the pilot symbol. The first signal is obtained by performing physical resource mapping on the first symbol, so that functions such as channel estimation and channel equalization that can be implemented only in need of the pilot symbol can be implemented.

In a possible implementation, before that a first communication apparatus generates a first signal based on a first symbol, the method further includes: The first communication apparatus generates the first symbol based on the second symbol and a pilot symbol matrix, where the third symbol is included in the pilot symbol matrix; and orders of elements in any two columns or any two rows in the pilot symbol matrix are different, or the pilot symbol matrix includes a first matrix and a second matrix, the first matrix and the second matrix correspond to different space domains, M pilot symbols in the first matrix are in one-to-one correspondence with M time-frequency resources, M pilot symbols in the second matrix are in one-to-one correspondence with M time-frequency resources, the time-frequency resources corresponding to the M pilot symbols in the first matrix are orthogonal to the time-frequency resources corresponding to the M pilot symbols in the second matrix, and M is an integer greater than 0.

In this implementation, the first communication apparatus generates the first symbol based on the second symbol and the pilot symbol matrix, so that the superposition processing can be accurately and quickly performed on the modulated data symbol and the pilot symbol. The time-frequency resources corresponding to different pilot symbols in the pilot symbol matrix are orthogonal, so that interference between the pilot symbols can be reduced.

In a possible implementation, the first symbol is obtained by inputting a first vector representing the second symbol to a first neural network for superposition processing.

In this implementation, the first communication apparatus inputs the first vector to the first neural network for superposition processing, to obtain the first symbol; and performs physical resource mapping on the first symbol, to obtain the first signal. The first signal is sent, so that a throughput can be improved.

In a possible implementation, the first vector is obtained by performing resource patch mapping on the second symbol.

In this implementation, the first vector is obtained by performing resource patch mapping on the second symbol, and the first vector may represent a resource patch corresponding to the second symbol.

In a possible implementation, the method further includes: The first communication apparatus receives first model information from a second communication apparatus, where the first communication apparatus is a terminal, and the second communication apparatus is an access network device. The first communication apparatus obtains the first neural network based on the first model information.

In this implementation, the first communication apparatus obtains the first neural network based on the first model information, so that the first neural network that needs to be used to generate the to-be-sent signal can be quickly and accurately obtained.

In a possible implementation, before that the first communication apparatus sends the first signal, the method further includes: The first communication apparatus sends third indication information to the second communication apparatus, where the third indication information indicates a second neural network, and the second neural network is used by the second communication apparatus to receive the signal generated by the first communication apparatus by using the first neural network. That the first communication apparatus sends the first signal includes: The first communication apparatus sends the first signal to the second communication apparatus.

In this implementation, the first communication apparatus sends the third indication information to the second communication apparatus, so that the second communication apparatus receives, by using the second neural network, the signal generated by the first communication apparatus by using the first neural network.

In a possible implementation, the method further includes: The first communication apparatus sends training data to the second communication apparatus based on first level information, where the first level information indicates that a receiver used by the second communication apparatus has a capability of participating in updating a power allocation matrix. The first communication apparatus obtains the first power allocation matrix based on first gradient information from the second communication apparatus, where the first gradient information is obtained by performing processing by the second communication apparatus based on the training data.

In this implementation, the first communication apparatus obtains the first power allocation matrix based on the first gradient information from the second communication apparatus, so that the first power allocation matrix applicable to this current scenario may be quickly obtained through training.

In a possible implementation, the method further includes: The first communication apparatus sends fourth indication information to a second communication apparatus based on second level information, where the second level information indicates that a receiver used by the second communication apparatus has a capability of participating in neural network training, and the fourth indication information indicates that the second communication apparatus and the first communication apparatus jointly train the first neural network.

In this implementation, the first communication apparatus sends the fourth indication information to the second communication apparatus based on the second level information, so that the first neural network applicable to this current scenario is obtained through training.

In a possible implementation, that the first communication apparatus sends first indication information to a second communication apparatus includes: The first communication apparatus sends the first indication information to the second communication apparatus based on first capability information, where the first capability information indicates that a receiver used by the second communication apparatus is a conventional receiver or a receiver that can participate in training.

In this implementation, the first communication apparatus sends the first indication information to the second communication apparatus based on the first capability information, so that the second communication apparatus may receive the signal from the first communication apparatus by using the first power allocation matrix.

In a possible implementation, the method further includes: The first communication apparatus sends fifth indication information and the training data to the second communication apparatus based on second capability information, where the second capability information indicates that the receiver used by the second communication apparatus has a training and inference function or the capability of participating in updating the power allocation matrix, and the fifth indication information indicates a third power allocation matrix. The first communication apparatus updates the third power allocation matrix to the first power allocation matrix based on the gradient information from the second communication apparatus, where the gradient information is obtained by performing processing by the second communication apparatus based on the third power allocation matrix and the training data.

In this implementation, the first communication apparatus sends the fifth indication information and the training data to the second communication apparatus based on the second capability information, so that the power allocation matrix that is applicable to this current scenario and that is used by the transmitter is obtained through training.

In a possible implementation, that the first communication apparatus sends third indication information to the second communication apparatus includes: The first communication apparatus sends the third indication information to the second communication apparatus based on third capability information, where the third capability information is used to determine that a receiver used by the second communication apparatus has a training and inference function and/or a capability of participating in neural network training.

In this implementation, the first communication apparatus sends the third indication information to the second communication apparatus based on the third capability information, so that the second communication apparatus receives, by using the second neural network, the signal generated by the first communication apparatus by using the first neural network.

According to a second aspect, an embodiment of this application provides another communication method. The method includes: A second communication apparatus receives a first signal, where the first signal is obtained by performing physical resource mapping on a first symbol, the first symbol is obtained by performing superposition processing on a second symbol and a third symbol, and the second symbol is a modulated data symbol. The second communication apparatus obtains the data symbol based on the first signal.

In this embodiment of this application, the first signal is obtained by performing physical resource mapping on the first symbol, and the first symbol is obtained by performing superposition processing on the second symbol and the third symbol. The second communication apparatus obtains the data symbol based on the first signal, so that a throughput can be improved.

In a possible implementation, the first symbol includes a symbol obtained by performing superposition processing on the second symbol and the third symbol and a symbol obtained by performing superposition processing on other symbols.

In this implementation, the first symbol includes the symbol obtained by performing superposition processing on the second symbol and the third symbol and the symbol obtained by performing superposition processing on the other symbols; and the first signal generated by using the first symbol is sent, so that a throughput can be improved.

In a possible implementation, the first symbol includes H symbols, each of the H symbols corresponds to one time-frequency resource, at least one of the H symbols is obtained by performing superposition processing on one modulated data symbol and one pilot symbol, the third symbol is a pilot symbol, and H is an integer greater than 1. For example, a first communication apparatus is to send H modulated data symbols, each of H symbols included in the first symbol is obtained by performing superposition processing on one modulated data symbol and one pilot symbol, and the H symbols are in one-to-one correspondence with the H modulated data symbols.

In this implementation, each of the H symbols included in the first symbol is obtained by performing superposition processing on one modulated data symbol and one pilot symbol; and the first signal generated by using the first symbol is sent, so that a throughput can be improved.

In a possible implementation, the first symbol is obtained by performing power superposition on the second symbol and the third symbol based on a first power allocation matrix, and the first power allocation matrix indicates a power proportion of the second symbol and/or a power proportion of the third symbol. Before that a second communication apparatus receives a first signal, the method further includes: The second communication apparatus receives first indication information from a first communication apparatus, where the first indication information indicates the first power allocation matrix. That the second communication apparatus obtains the data symbol based on the first signal includes: The second communication apparatus obtains the data symbol based on the first signal and the first power allocation matrix.

In this implementation, the second communication apparatus receives the first indication information from the first communication apparatus, so that the first power allocation matrix can be accurately obtained.

In a possible implementation, before that a second communication apparatus receives a first signal, the method further includes: The second communication apparatus receives pilot indication information from the first communication apparatus, where the pilot indication information indicates a pilot sequence or a pilot symbol matrix, and the pilot sequence or the pilot symbol matrix is used by the second communication apparatus to receive the first signal. The pilot sequence or the pilot symbol matrix includes a plurality of pilot symbols.

In this implementation, the second communication apparatus receives the pilot indication information from the first communication apparatus, so that the pilot sequence or the pilot symbol matrix is accurately obtained based on the pilot indication information, and the signal from the first communication apparatus is further received by using the pilot sequence or the pilot symbol matrix.

In a possible implementation, the first symbol is obtained by performing power superposition on the second symbol and the third symbol based on a first power allocation matrix, and the first power allocation matrix indicates a power proportion of the second symbol and/or a power proportion of the third symbol. The method further includes: The second communication apparatus sends first indication information to a first communication apparatus, where the first indication information indicates the first power allocation matrix. The first communication apparatus is a terminal, and the second communication apparatus is an access network device.

In this implementation, the second communication apparatus sends the first indication information to the first communication apparatus, so that the first communication apparatus accurately obtains the first power allocation matrix based on the first indication information.

In a possible implementation, the method further includes: The second communication apparatus sends pilot indication information to the first communication apparatus, where the pilot indication information indicates a pilot sequence or a pilot symbol matrix, and the pilot sequence or the pilot symbol matrix is used by the first communication apparatus to generate the first signal.

In this implementation, the second communication apparatus sends the pilot indication information to the first communication apparatus, so that the first communication apparatus accurately obtains the pilot sequence or the pilot symbol matrix based on the pilot indication information, and further generates the to-be-sent signal by using the pilot sequence or the pilot symbol matrix.

In a possible implementation, the method further includes: The second communication apparatus receives training data from a first communication apparatus. The second communication apparatus sends first gradient information to the first communication apparatus, where the first gradient information is used by the first communication apparatus to perform processing to obtain a first power allocation matrix, and the first gradient information is obtained by performing processing by the second communication apparatus based on the training data.

In this implementation, the second communication apparatus sends the first gradient information to the first communication apparatus, so that the first communication apparatus can train, based on the first gradient information, the first power allocation matrix applicable to this current scenario.

In a possible implementation, the first symbol is obtained by inputting a first vector representing the second symbol to a first neural network for superposition processing. The method further includes: The second communication apparatus receives fourth indication information from a first communication apparatus, where the fourth indication information indicates that the second communication apparatus and the first communication apparatus jointly train the first neural network. The second communication apparatus sends second gradient information to the first communication apparatus, where the second gradient information is used to update the first neural network, and the second gradient information is obtained by the second communication apparatus based on training data from the first communication apparatus.

In this implementation, the second communication apparatus sends the second gradient information to the first communication apparatus, so that the first communication apparatus can train, based on the second gradient information, the first neural network applicable to this current scenario.

In a possible implementation, the first symbol is obtained by inputting a first vector representing the second symbol to a first neural network for superposition processing. The method further includes: The second communication apparatus sends first model information to a first communication apparatus, where the first model information is used by the second communication apparatus to obtain the first neural network.

In this implementation, the second communication apparatus sends the first model information to the first communication apparatus, so that the first communication apparatus obtains the first neural network based on the first model information.

In a possible implementation, the method further includes: The second communication apparatus receives third indication information from the first communication apparatus, where the third indication information indicates a second neural network, and the second neural network is used by the second communication apparatus to receive the signal generated by the first communication apparatus by using the first neural network. That the second communication apparatus obtains the data symbol based on the first signal includes: The second communication apparatus obtains the data symbol based on the first signal and the second neural network.

In this implementation, the second communication apparatus obtains the data symbol based on the first signal and the second neural network, so that a throughput can be improved.

According to a third aspect, an embodiment of this application provides a communication apparatus. The communication apparatus has a function of implementing behavior in the method embodiment in the first aspect. The function may be implemented by hardware, or may be implemented by hardware executing corresponding software. The hardware or software includes one or more modules or units that correspond to the foregoing function. In a possible implementation, a transceiver module and a processing module are included. The processing module is configured to generate a first signal based on a first symbol, where the first symbol is obtained by performing superposition processing on a second symbol and a third symbol, and the second symbol is a modulated data symbol. The transceiver module is configured to send the first signal, where the first signal is obtained by performing physical resource mapping on the first symbol.

In a possible implementation, the processing module is further configured to perform superposition processing on the second symbol and the third symbol, to obtain the first symbol.

In a possible implementation, the first symbol is obtained by performing power superposition on the second symbol and the third symbol.

In a possible implementation, the first symbol includes H symbols, each of the H symbols corresponds to one time-frequency resource, at least one of the H symbols is obtained by performing superposition processing on one modulated data symbol and one pilot symbol, the third symbol is a pilot symbol, and H is an integer greater than 1. For example, a first communication apparatus is to send H modulated data symbols, each of H symbols included in the first symbol is obtained by performing superposition processing on one modulated data symbol and one pilot symbol, and the H symbols are in one-to-one correspondence with the H modulated data symbols.

In a possible implementation, the processing module is further configured to perform superposition processing on H modulated data symbols and one or more pilot symbols, to obtain the first symbol.

In a possible implementation, the first symbol is obtained by performing power superposition on the second symbol and the third symbol based on a first power allocation matrix, where the first power allocation matrix indicates a power proportion of the second symbol and/or a power proportion of the third symbol.

In a possible implementation, the transceiver module is further configured to send first indication information to the second communication apparatus, where the first indication information indicates the first power allocation matrix. The transceiver module is specifically configured to send the first signal to the second communication apparatus.

In a possible implementation, the transceiver module is further configured to send pilot indication information to the second communication apparatus, where the pilot indication information indicates a pilot sequence or a pilot symbol matrix, and the pilot sequence or the pilot symbol matrix is used by the second communication apparatus to receive the first signal. The pilot sequence or the pilot symbol matrix includes a plurality of pilot symbols.

In a possible implementation, the pilot indication information includes an identifier of the pilot sequence or an identifier of the pilot symbol matrix.

In a possible implementation, the transceiver module is further configured to receive second indication information from a second communication apparatus, where the second indication information indicates the first power allocation matrix; and the first communication apparatus is a terminal, and the second communication apparatus is an access network device.

In a possible implementation, the transceiver module is further configured to receive pilot indication information from the second communication apparatus, where the pilot indication information indicates a pilot sequence or a pilot symbol matrix, and the pilot sequence or the pilot symbol matrix is used by the first communication apparatus to generate the first signal.

In a possible implementation, the first indication information includes information used to generate the first power allocation matrix.

In a possible implementation, a value of an element corresponding to a pilot symbol in the first power allocation matrix is 0 or a first power proportion, where the first indication information includes the first power proportion, a start location and a spacing of a subcarrier, and a start location and a spacing of the symbol.

In a possible implementation, the transceiver module is further configured to send a second signal, where the second signal is obtained by performing physical resource mapping on a fourth symbol, the fourth symbol includes a fifth symbol and a sixth symbol, the fourth symbol is obtained by performing power superposition on a plurality of symbols based on a second power allocation matrix, and the second power allocation matrix is different from the first power allocation matrix.

In a possible implementation, the fifth symbol is a modulated data symbol, the sixth symbol is a pilot symbol, and an element corresponding to the sixth symbol in the second power allocation matrix is 1.

In a possible implementation, the third symbol is a pilot symbol.

In a possible implementation, the processing module is further configured to generate the first symbol based on the second symbol and a pilot symbol matrix, where the third symbol is included in the pilot symbol matrix; and orders of elements in any two columns or any two rows in the pilot symbol matrix are different, or the pilot symbol matrix includes a first matrix and a second matrix, the first matrix and the second matrix correspond to different space domains, M pilot symbols in the first matrix are in one-to-one correspondence with M time-frequency resources, M pilot symbols in the second matrix are in one-to-one correspondence with M time-frequency resources, the time-frequency resources corresponding to the M pilot symbols in the first matrix are orthogonal to the time-frequency resources corresponding to the M pilot symbols in the second matrix, and M is an integer greater than 0.

In a possible implementation, the first symbol is obtained by inputting a first vector representing the second symbol to a first neural network for superposition processing.

In a possible implementation, the processing module is further configured to input a first vector representing the second symbol to a first neural network for superposition processing, to obtain the first symbol.

In a possible implementation, the first vector is obtained by performing resource patch mapping on the second symbol.

In a possible implementation, the processing module is further configured to perform resource patch mapping on the second symbol, to obtain the first vector.

In a possible implementation, the transceiver module is further configured to receive first model information from a second communication apparatus, where the first communication apparatus is a terminal, and the second communication apparatus is an access network device. The processing module is further configured to obtain the first neural network based on the first model information.

In a possible implementation, the transceiver module is further configured to send third indication information to the second communication apparatus, where the third indication information indicates a second neural network, and the second neural network is used by the second communication apparatus to receive the signal generated by the first communication apparatus by using the first neural network. The transceiver module is specifically configured to send the first signal to the second communication apparatus.

In a possible implementation, the processing module is further configured to: control, based on first level information, the transceiver module to send training data to the second communication apparatus, where the first level information indicates that a receiver used by the second communication apparatus has a capability of participating in updating a power allocation matrix; and obtain the first power allocation matrix based on first gradient information from the second communication apparatus, where the first gradient information is obtained by performing processing by the second communication apparatus based on the training data.

In a possible implementation, the processing module is further configured to control, based on the second level information, the transceiver module to send fourth indication information to the second communication apparatus, where the second level information indicates that a receiver used by the second communication apparatus has a capability of participating in neural network training, and the fourth indication information indicates that the second communication apparatus and the first communication apparatus jointly train the first neural network.

In a possible implementation, the transceiver module is specifically configured to send the first capability indication information to the second communication apparatus based on first capability information, where the first capability information indicates that a receiver used by the second communication apparatus is a conventional receiver or a receiver that can participate in training.

In a possible implementation, the processing module is further configured to control, based on second capability information, the transceiver module to send fifth indication information and the training data to the second communication apparatus, where the second capability information indicates that the receiver used by the second communication apparatus has a training and inference function or the capability of participating in updating the power allocation matrix, and the fifth indication information indicates a third power allocation matrix. The first communication apparatus updates the third power allocation matrix to the first power allocation matrix based on the gradient information from the second communication apparatus, where the gradient information is obtained by performing processing by the second communication apparatus based on the third power allocation matrix and the training data.

In a possible implementation, the transceiver module is specifically configured to send the third indication information to the second communication apparatus based on third capability information, where the third capability information is used to determine that a receiver used by the second communication apparatus has a training and inference function and/or a capability of participating in neural network training.

For technical effects achieved by the possible implementations of the third aspect, refer to descriptions of technical effects of the first aspect or the possible implementations of the first aspect.

According to a fourth aspect, an embodiment of this application provides a communication apparatus. The communication apparatus has a function of implementing behavior in the method embodiment in the second aspect. The function may be implemented by hardware, or may be implemented by hardware executing corresponding software. The hardware or software includes one or more modules or units that correspond to the foregoing function. In a possible implementation, a transceiver module and a processing module are included. The transceiver module is configured to receive a first signal, where the first signal is obtained by performing physical resource mapping on a first symbol, the first symbol is obtained by performing superposition processing on a second symbol and a third symbol, and the second symbol is a modulated data symbol. The processing module is configured to obtain the data symbol based on the first signal.

In a possible implementation, the first symbol includes a symbol obtained by performing superposition processing on the second symbol and the third symbol and a symbol obtained by performing superposition processing on other symbols.

In a possible implementation, the first symbol includes H symbols, each of the H symbols corresponds to one time-frequency resource, at least one of the H symbols is obtained by performing superposition processing on one modulated data symbol and one pilot symbol, the third symbol is a pilot symbol, and H is an integer greater than 1. For example, a first communication apparatus is to send H modulated data symbols, each of H symbols included in the first symbol is obtained by performing superposition processing on one modulated data symbol and one pilot symbol, and the H symbols are in one-to-one correspondence with the H modulated data symbols.

In a possible implementation, the first symbol is obtained by performing power superposition on the second symbol and the third symbol based on a first power allocation matrix, and the first power allocation matrix indicates a power proportion of the second symbol and/or a power proportion of the third symbol. The transceiver module is further configured to receive first indication information from a first communication apparatus, where the first indication information indicates the first power allocation matrix. The processing module is specifically configured to obtain the data symbol based on the first signal and the first power allocation matrix.

In a possible implementation, the transceiver module is further configured to receive pilot indication information from the first communication apparatus, where the pilot indication information indicates a pilot sequence or a pilot symbol matrix, and the pilot sequence or the pilot symbol matrix is used by the second communication apparatus to receive the first signal. The pilot sequence or the pilot symbol matrix includes a plurality of pilot symbols.

In a possible implementation, the first symbol is obtained by performing power superposition on the second symbol and the third symbol based on a first power allocation matrix, and the first power allocation matrix indicates a power proportion of the second symbol and/or a power proportion of the third symbol. The transceiver module is further configured to send first indication information to the first communication apparatus, where the first indication information indicates the first power allocation matrix. The first communication apparatus is a terminal, and the second communication apparatus is an access network device.

In a possible implementation, the transceiver module is further configured to send pilot indication information to the first communication apparatus, where the pilot indication information indicates a pilot sequence or a pilot symbol matrix, and the pilot sequence or the pilot symbol matrix is used by the first communication apparatus to generate the first signal.

In a possible implementation, the transceiver module is further configured to: receive training data from a first communication apparatus; and send first gradient information to the first communication apparatus, where the first gradient information is used by the first communication apparatus to perform processing to obtain a first power allocation matrix, and the first gradient information is obtained by performing processing by a second communication apparatus based on the training data.

In a possible implementation, the first symbol is obtained by inputting a first vector representing the second symbol to a first neural network for superposition processing. The transceiver module is further configured to: receive fourth indication information from a first communication apparatus, where the fourth indication information indicates that a second communication apparatus and the first communication apparatus jointly train the first neural network; and send second gradient information to the first communication apparatus, where the second gradient information is used to update the first neural network, and the second gradient information is obtained by the second communication apparatus based on training data from the first communication apparatus.

In a possible implementation, the first symbol is obtained by inputting a first vector representing the second symbol to a first neural network for superposition processing.

The transceiver module is further configured to send first model information to a first communication apparatus, where the first model information is used by the second communication apparatus to obtain the first neural network.

In a possible implementation, the transceiver module is further configured to receive third indication information from the first communication apparatus, where the third indication information indicates a second neural network, and the second neural network is used by the second communication apparatus to receive the signal generated by the first communication apparatus by using the first neural network. The processing module is specifically configured to obtain the data symbol based on the first signal and the second neural network.

For technical effects achieved by the possible implementations of the fourth aspect, refer to descriptions of technical effects of the second aspect or the possible implementations of the second aspect.

According to a fifth aspect, this application provides a communication apparatus. The communication apparatus includes a processor. The processor may be configured to execute computer-executable instructions stored in a memory, so that the method shown any one of the first aspect or the possible implementations of the first aspect is performed, or the method shown in any one of the second aspect or the possible implementations of the second aspect is performed.

In this embodiment of this application, in a process of performing the foregoing method, a process of sending information in the foregoing method may be understood as a process of outputting information based on an instruction of the processor. When the information is output, the processor outputs the information to a transceiver, so that the transceiver transmits the information. After the information is output by the processor, other processing may further need to be performed on the information before the information arrives at the transceiver. Similarly, when the processor receives input information, the transceiver receives the information, and inputs the information into the processor. Further, after the transceiver receives the information, other processing may need to be performed on the information before the information is input into the processor.

An operation such as sending and/or receiving in the processor may be usually understood as an instruction output based on the processor if there is no special description, or if the operation does not conflict with an actual function or internal logic of the operation in related descriptions.

In an implementation process, the processor may be a processor specially configured to perform these methods, or may be a processor, for example, a general-purpose processor that executes computer instructions in a memory to perform these methods. For example, the processor may be further configured to execute a program stored in the memory. When the program is executed, the communication apparatus is enabled to perform the method shown in any one of the first aspect or the possible implementations of the first aspect. In a possible implementation, the memory is located outside the communication apparatus. In a possible implementation, the memory is located inside the communication apparatus.

In a possible implementation, the processor and the memory may alternatively be integrated into one device. In other words, the processor and the memory may alternatively be integrated together.

In a possible implementation, the communication apparatus further includes a transceiver. The transceiver is configured to: receive a signal, send a signal, or the like.

According to a sixth aspect, this application provides a data processing apparatus. The data processing apparatus includes a processing circuit and an interface circuit. The interface circuit is configured to: obtain data or output data. The processing circuit is configured to perform the corresponding method shown in any one of the first aspect or the possible implementations of the first aspect, or the processing circuit is configured to perform the corresponding method shown in any one of the second aspect or the possible implementations of the second aspect.

According to a seventh aspect, this application provides a computer-readable storage medium. The computer-readable storage medium is configured to store a computer program. When the computer program is run on a computer, the method shown in any one of the first aspect or the possible implementations of the first aspect is performed, or the method shown in any one of the second aspect or the possible implementations of the second aspect is performed.

According to an eighth aspect, this application provides a computer program product. The computer program product includes a computer program or instructions. When the computer program product runs on a computer, the method shown in any one of the first aspect or the possible implementations of the first aspect is performed, or the method shown in any one of the second aspect or the possible implementations of the second aspect is performed.

According to a ninth aspect, this application provides a communication system, including the first communication apparatus according to any one of the third aspect or the possible implementations of the third aspect and the first communication apparatus according to any one of the fourth aspect or the possible implementations of the fourth aspect.

## BRIEF DESCRIPTION OF DRAWINGS

To describe technical solutions in embodiments of this application or in the background more clearly, the following describes the accompanying drawings for describing embodiments of this application or the background.

FIG. 1 is an example of a satellite communication system according to an embodiment of this application;
FIG. 2 is an example of a wireless communication system according to an embodiment of this application;

FIG. 3 is a flowchart of a communication method according to an embodiment of this application;

FIG. 4A is a diagram of performance comparison between a throughput of a communication system and throughputs of common orthogonal frequency division multiplexing systems according to an embodiment of this application;

FIG. 4B is a diagram of performance comparison between a throughput of another communication system and throughputs of common orthogonal frequency division multiplexing systems according to an embodiment of this application;

FIG. 5 is an interaction diagram of another communication method according to an embodiment of this application;

FIG. 6 is an example of a diagram of comparison between subframes according to an embodiment of this application;

FIG. 7 is an example of two types of pilot symbol matrices according to an embodiment of this application;

FIG. 8 is an interaction diagram of another communication method according to an embodiment of this application;

FIG. 9 is a flowchart of another communication method according to an embodiment of this application;

FIG. 10 is a diagram of a method for exchanging power allocation matrix information according to an embodiment of this application;

FIG. 11 is a diagram of another method for exchanging power allocation matrix information according to an embodiment of this application;

FIG. 12 is an interaction diagram of training a power allocation matrix according to an embodiment of this application;

FIG. 13 is an interaction diagram of another communication method according to an embodiment of this application;

FIG. 14 is a diagram of a resource patch according to an embodiment of this application;

FIG. 15 is a diagram of a structure of a first neural network according to an embodiment of this application;

FIG. 16 is a flowchart of processing a to-be-sent bitstream to obtain a to-be-sent signal according to an embodiment of this application;

FIG. 17 is an interaction diagram of another communication method according to an embodiment of this application;

FIG. 18 is an interaction diagram of another communication method according to an embodiment of this application;

FIG. 19 is a diagram of a structure of a communication apparatus 1900 according to an embodiment of this application;

FIG. 20 is a diagram of a structure of another communication apparatus 200 according to an embodiment of this application; and

FIG. 21 is a diagram of a structure of another communication apparatus 210 according to an embodiment of this application.

## DESCRIPTION OF EMBODIMENTS

The terms "first", "second", and the like in the specification, claims, and accompanying drawings of this application are merely used to distinguish between different objects, and are not used to describe a specific order. In addition, the terms "include", "have", and any other variant thereof are intended to cover a non-exclusive inclusion. For example, a process, a method, a system, a product, or a device that includes a series of steps or units is not limited to the listed steps or units, but optionally further includes an unlisted step or unit, or optionally further includes another step or unit inherent to the process, the method, the product, or the device.

An "embodiment" mentioned in the specification means that a specific feature, structure, or characteristic described in combination with the embodiment may be included in at least one embodiment of this application. The phrase appear at various locations in the specification may not necessarily refer to a same embodiment, and is not an independent or optional embodiment exclusive from another embodiment. It may be understood explicitly and implicitly by a person skilled in the art that the embodiments described in the specification may be combined with another embodiment.

The terms used in the following embodiments of this application are merely intended to describe specific embodiments, but are not intended to limit this application. The terms "one", "a", "the", "the foregoing", and "this" of singular forms used in this specification and the appended claims of this application are also intended to include plural forms, unless otherwise specified in the context clearly. It should also be understood that the term "and/or" used in this application means and includes any or all possible combinations of one or more listed items. For example, "A and/or B" may represent three cases: Only A exists, only B exists, and both A and B exist, where A and B may be singular or plural. The term "a plurality of" used in this application means two or more.

As described in the background, how to design more efficient communication solutions is an important topic of current research. This application provides several more efficient communication solutions. Compared with existing communication solutions, the communication solutions provided in this application can improve a throughput of a wireless communication system and reduce a transmit power.

The communication solutions provided in this application may be applied to a wireless communication system like a 5G communication system, a satellite communication system, or a short-range communication system.

It needs to be noted that the wireless communication system mentioned in embodiments of this application includes but is not limited to: a 4th generation (4th generation, 4G) communication system like a narrowband internet of things (narrowband internet of things, NB-IoT) system or a long term evolution (long term evolution, LTE) system, a non-terrestrial network (non-terrestrial network, NTN) system such as a satellite communication system, a 5th generation (5th generation, 5G) communication system or a new radio (new radio, NR) system, a communication system evolved after 5G like a 6G system, a wireless fidelity (wireless fidelity, Wi-Fi) system, and a communication system supporting integration of a plurality of wireless technologies.

The following first describes examples of several communication systems to which the communication solutions provided in this application are applicable.

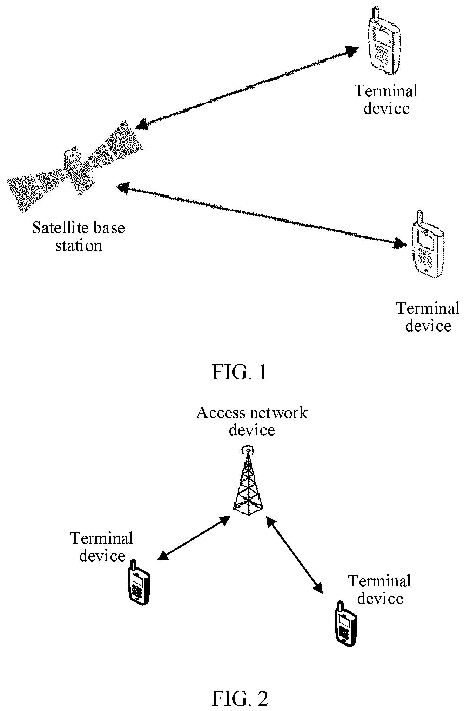

The communication solutions provided in this application may be applied to a satellite communication system. FIG. 1 is an example of a satellite communication system according to an embodiment of this application. As shown in FIG. 1, the satellite communication system includes a satellite base station and a terminal-type network element, for example, a terminal device in FIG. 1. The satellite base station provides a communication service for the terminal device, and the terminal device may include a device like a smartphone, a smartwatch, or a tablet computer. The satellite base station transmits downlink data to the terminal device, and the terminal device may transmit uplink data to the satellite base station. It should be understood that a transmitter and/or a receiver may be deployed in both the satellite base station and the terminal-type network element.

FIG. 2 is an example of a wireless communication system according to an embodiment of this application. As shown in FIG. 2, the communication system includes one or more terminal devices. In FIG. 2, only two terminal devices are used as an example, and one or more access network devices (for example, a base station) that can provide a communication service for the terminal devices are used, where in FIG. 2, only one access network device is used. In some embodiments, the wireless communication system may include a cell, each cell includes one or more access network devices, and the access network device provides a communication service for a plurality of terminals. The wireless communication system may alternatively perform point-to-point communication. For example, the plurality of terminals communicate with each other.

The terminal is a device that has a wireless transceiver function. The terminal may communicate with one or more core network (core network, CN) devices (or referred to as core devices) via an access network device (or referred to as an access device) in a radio access network (radio access network, RAN). The terminal may be deployed on the land, including an indoor device, an outdoor device, a handheld device, or a vehicle-mounted device; or may be deployed on a water surface (for example, on a ship); or may be deployed in the air (for example, on a plane, a balloon, or a satellite). In embodiments of this application, the terminal may also be referred to as a terminal device or user equipment (user equipment, UE), and may be a mobile phone (mobile phone), a mobile station (mobile station, MS), a tablet computer (pad), a computer having a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in telemedicine (remote medical), a wireless terminal device in a smart grid (smart grid), a wireless terminal in transportation safety (transportation safety), a wireless terminal device in a smart city (smart city), a wireless terminal in a smart home (smart home), a subscriber unit (subscriber unit), a cellular phone (cellular phone), a wireless data card, a personal digital assistant (personal digital assistant, PDA) computer, a tablet computer, a laptop computer (laptop computer), a machine type communication (machine type communication, MTC) terminal, or the like. The terminal may include various handheld devices, vehicle-mounted devices, wearable devices, or computing devices that have a wireless communication function, or other processing devices connected to a wireless modem. Optionally, the terminal may be a handheld device (handset), a vehicle-mounted device, a wearable device, a terminal in the internet of things or the internet of vehicles, a terminal in any form in 5G or a communication system evolved after 5G, or the like that has a wireless communication function. This is not limited in this application.

The access network device may be any device that has a wireless transceiver function and that can communicate with the terminal, for example, a radio access network (radio access network, RAN) node that connects the terminal to a wireless network. Currently, examples of some RAN nodes include a macro base station, a micro base station (also referred to as a small cell), a relay station, an access point, a gNB, a transmission reception point (transmission reception point, TRP), an evolved NodeB (evolved NodeB, eNB), a radio network controller (radio network controller, RNC), a home base station (for example, a home evolved NodeB, or a home NodeB, HNB), a baseband unit (baseband unit, BBU), a Wi-Fi access point (access point, AP), integrated access and backhaul (integrated access and backhaul, IAB), and the like.

A main principle of the communication solutions provided in this application is as follows: Two or more symbols that need to occupy different time-frequency resources in the existing communication solutions are sent by using a same time-frequency resource; or the transmitter provided in this embodiment of this application may send, in a symbol superposition manner by using a time-frequency resource, two or more symbols that need to occupy different time-frequency resources. For example, a pilot symbol and a data symbol in a signal sent by an existing transmitter respectively occupy different time-frequency resources, and a pilot symbol and a data symbol in a signal sent by the transmitter provided in this embodiment of this application may occupy a same time-frequency resource.

The following describes, with reference to the accompanying drawings, the communication solutions provided in embodiments of this application.

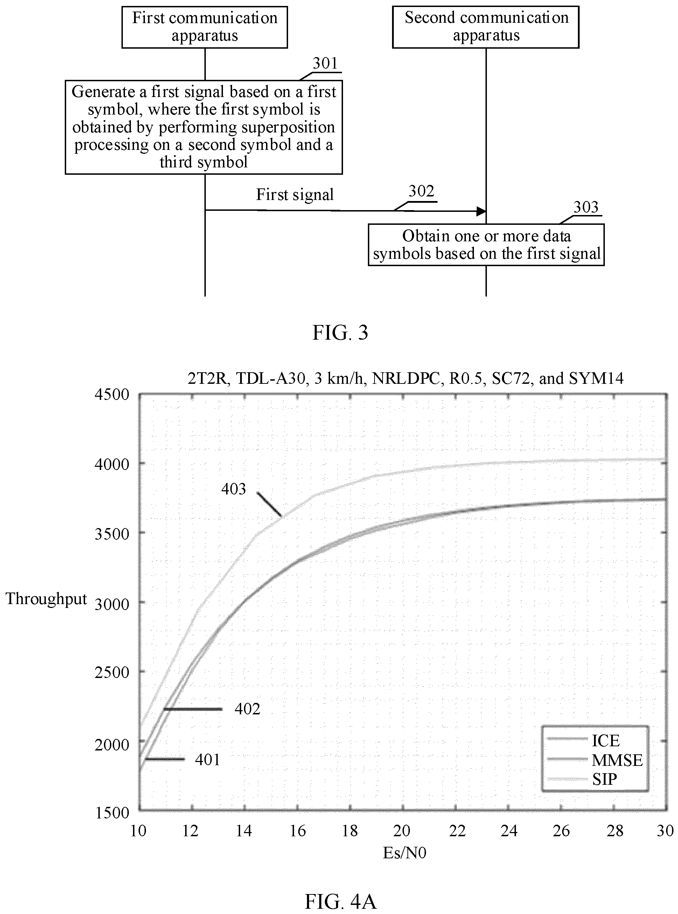

FIG. 3 is a flowchart of a communication method according to an embodiment of this application. As shown in FIG. 3, the method includes the following steps.

301: A first communication apparatus generates a first signal based on a first symbol.

The first communication apparatus may be an access network device or a terminal. The first symbol is obtained by performing superposition processing on a second symbol and a third symbol. The second symbol is a modulated data symbol.

Optionally, the third symbol is a pilot symbol. Optionally, the third symbol is a modulated data symbol. Optionally, the third symbol is a preset symbol or a symbol obtained through training.

In a possible implementation, the first symbol is obtained by performing power superposition on the second symbol and the third symbol. For example, the first symbol is obtained by performing power superposition on the second symbol and the third symbol based on a first power allocation matrix. The first power allocation matrix indicates a power proportion of the second symbol and/or a power proportion of the third symbol. Subsequently, the implementation of performing power superposition on the second symbol and the third symbol based on the first power allocation matrix is described in detail.

In another possible implementation, the first symbol is obtained by inputting a first vector representing the second symbol to a first neural network for superposition processing. The first communication apparatus may receive first model information from a second communication apparatus, and perform processing based on the first model information to obtain the first neural network. Subsequently, the implementation of inputting the first vector representing the second symbol to the first neural network for the superposition processing in the first communication apparatus is described in detail.

302: The first communication apparatus sends the first signal to the second communication apparatus. Correspondingly, the second communication apparatus receives the first signal. The first signal is obtained by performing physical resource mapping on the first symbol.

Optionally, the first communication apparatus sends the first signal in a broadcast manner.

303: The second communication apparatus obtains one or more data symbols based on the first signal.

In a possible implementation, the first symbol is obtained by performing power superposition on the second symbol and the third symbol based on the first power allocation matrix, and the first power allocation matrix indicates the power proportion of the second symbol and/or the power proportion of the third symbol. Before receiving the first signal, the second communication apparatus may perform the following operation: receiving first indication information from the first communication apparatus, where the first indication information indicates the first power allocation matrix. The second communication apparatus may perform processing based on the first signal and the first power allocation matrix to obtain the one or more data symbols. The second communication apparatus may be a terminal, and the first communication apparatus may be the access network device.

In a possible implementation, the first symbol is obtained by performing power superposition on the second symbol and the third symbol based on the first power allocation matrix, and the first power allocation matrix indicates the power proportion of the second symbol and/or the power proportion of the third symbol. Before that the first communication apparatus sends the first signal to the second communication apparatus, the following operation may be performed: sending first indication information to the first communication apparatus, where the first indication information indicates the first power allocation matrix. The first communication apparatus is the terminal, and the second communication apparatus is an access network device.

In a possible implementation, the first symbol is obtained by inputting the first vector representing the second symbol to the first neural network for the superposition processing. Before receiving the first signal, the second communication apparatus may perform the following operation: receiving third indication information from the first communication apparatus, where the third indication information indicates a second neural network, and the second neural network is used by the second communication apparatus to receive the signal generated by the first communication apparatus by using the first neural network. The second neural network is a neural network used by a receiver of the second communication apparatus. The second communication apparatus may obtain the data symbol based on the first signal and the second neural network.

For a communication system having two transmit antennas and two receive antennas (to be specific, a transmitter sends a signal through the two antennas, and a receiver receives a signal through the two antennas), the transmitter generates and sends the signal in a power superposition manner provided in this application, and the receiver using a neural network receives the signal sent by the transmitter. A manner of calculating a pilot power proportion includes dividing a sum of power proportions of pilot symbols in the sent signal by a total quantity of symbols in the sent signal, and the pilot power proportion is about 2.4%. In a common OFDM system, one OFDM symbol sent by a transmitter includes one pilot symbol and 13 modulated data symbols, a manner of calculating a pilot power proportion is (1/14), and the pilot power proportion is about 7. 1%. It can be learned that, in at least some communication systems, a signal is generated and sent in the power superposition manner provided in this application, so that a pilot power can be reduced, that is, a transmit power of the signal is reduced. The implementation of inputting the first vector representing the second symbol to the first neural network for the superposition processing has a same output compared with the implementation of performing power superposition on the second symbol and the third symbol based on the first power allocation matrix. Therefore, the implementation of inputting the first vector representing the second symbol to the first neural network for the superposition processing provided in this application is used, so that the transmit power can also be reduced.

FIG. 4A is a diagram of performance comparison between a throughput (throughput) of a communication system and throughputs of common orthogonal frequency division multiplexing systems according to an embodiment of this application. In FIG. 4A, 401 represents a throughput obtained by using an ideal channel estimation algorithm and a minimum mean square error detection algorithm, 402 represents a throughput obtained by using a minimum mean square error channel estimation algorithm and the minimum mean square error detection algorithm, and 403 represents a throughput obtained by using the communication system provided in this embodiment of this application (in an implementation of performing power superposition on a second symbol and a third symbol based on a first power allocation matrix). An improvement degree obtained through comparison between an equivalent throughput obtained by using the communication system provided in this embodiment of this application and system equivalent throughputs obtained by using the other two common orthogonal frequency division multiplexing systems is approximately an improvement degree obtained through comparison between a throughput obtained when a horizontal coordinate of a curve represented by 403 is 30 and a throughput obtained when a horizontal coordinate of a curve represented by 401 (or 402) is 30. The improvement degree is about 7.8% obtained through comparison between the throughput that is when the horizontal coordinate of the curve represented by 403 is 30 and the throughput that is when the horizontal coordinate of the curve represented by 401 is 30. Therefore, a system equivalent throughput can be improved by about 7.8% when the communication system provided in this embodiment of this application is used.

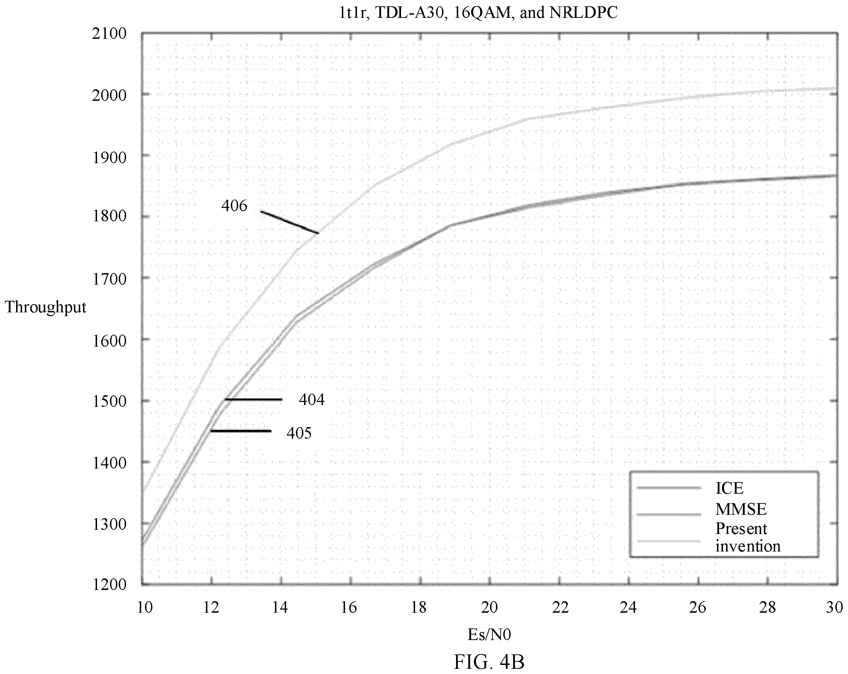

FIG. 4B is a diagram of performance comparison between a throughput (throughput) of another communication system and throughputs of common orthogonal frequency division multiplexing systems according to an embodiment of this application. In FIG. 4B, 404 represents a throughput obtained by using an ideal channel estimation algorithm and a minimum mean square error detection algorithm, 405 represents a throughput obtained by using a minimum mean square error channel estimation algorithm and the minimum mean square error detection algorithm, and 406 represents a throughput obtained by using the communication system provided in this embodiment of this application (in an implementation of inputting a first vector representing a second symbol to a first neural network for superposition processing). It can be learned through comparison between the throughputs represented by 404, 405, and 406 that, a system equivalent throughput can be significantly improved when the communication system provided in this embodiment of this application is used.

In this embodiment of this application, a first symbol is obtained by performing superposition processing on the second symbol and a third symbol, and the first signal generated by using the first symbol is sent, so that a throughput can be improved.

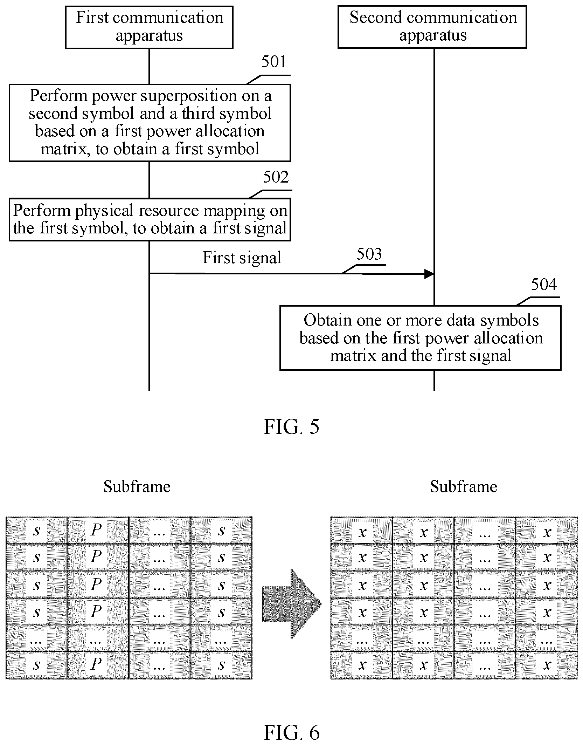

FIG. 5 is an interaction diagram of another communication method according to an embodiment of this application. An interaction procedure in FIG. 5 is a possible implementation of the method described in FIG. 3. In this possible implementation, a first communication apparatus performs power superposition on a modulated data symbol and a pilot symbol based on power allocation to obtain a symbol, and further generates a to-be-sent signal by using the symbol obtained through power superposition. As shown in FIG. 5, the method includes the following steps.

501: The first communication apparatus performs power superposition on a second symbol and a third symbol based on a first power allocation matrix, to obtain a first symbol.

The second symbol may be a modulated data symbol, and the third symbol may be a pilot symbol. The first power allocation matrix may be preconfigured by the first communication apparatus, or may be obtained based on indication information of another communication apparatus. In other words, the first communication apparatus may autonomously determine a specific power allocation matrix to be used to perform power superposition on the second symbol and the third symbol, or may perform power superposition on the second symbol and the third symbol based on the first power allocation matrix as indicated by another communication apparatus. Values of elements in the first power allocation matrix may be the same or different. That the first communication apparatus performs power superposition on a second symbol and a third symbol based on a first power allocation matrix, to obtain a first symbol may be that a transmitter used by the first communication apparatus performs power superposition on the second symbol and the third symbol based on the first power allocation matrix, to obtain the first symbol.

In a possible implementation, the first communication apparatus is a terminal, and a second communication apparatus is an access network device. Before performing step 501, the first communication apparatus receives second indication information from the second communication apparatus, where the second indication information indicates the first power allocation matrix; or obtains the first power allocation matrix based on first indication information. The first indication information may include identification information of the first power allocation matrix, may include the first power allocation matrix, or may include information needed by the second communication apparatus to obtain the first power allocation matrix.

An example of a formula that may be used by the first communication apparatus to perform power superposition on the second symbol and the third symbol based on the first power allocation matrix is as follows:

$$x = \sqrt{1-w} \times s + \sqrt{w} \times P, \text{where } w \in [0,1], \text{and } w \in \mathbb{R} \quad (1).$$

x represents the first symbol, s represents the second symbol, p represents the third symbol, w represents a power proportion of the third symbol, and (1-w) represents a power proportion of the second symbol. A value range of w is from 0 to 1. To be specific, a minimum value of w is 0, and a maximum value of w is 1. w may be an element corresponding to the third symbol in the first power allocation matrix, and/or (1-w) may be an element corresponding to the second symbol in the first power allocation matrix. The second symbol is the modulated data symbol, and the third symbol is the pilot symbol. It should be understood that any element in the first power allocation matrix represents a power proportion of one modulated data symbol or a power proportion of one pilot symbol. The elements in the first power allocation matrix may be preset (or preconfigured) or obtained through training. A modulated data symbol (for example, the second symbol) to be sent by the first communication apparatus may be included in a data symbol matrix, and each element in the data symbol matrix is one modulated data symbol to be sent by the first communication apparatus. An element in the data symbol matrix used by the first communication apparatus is in one-to-one correspondence with an element in a pilot symbol matrix. The first communication apparatus generates a to-be-sent signal based on one or more data symbol matrices.

In a possible implementation, a first power allocation matrix, a data symbol matrix (including a plurality of modulated data symbols to be sent by the first communication apparatus), and a pilot symbol matrix used by the first communication apparatus have a same size. Elements at same locations in the first power allocation matrix, the data symbol matrix, and the pilot symbol matrix are in one-to-one correspondence. For example, an element in an $i^{th}$ row and a $j^{th}$ column of the data symbol matrix is a second symbol, an element in an $i^{th}$ row and a $j^{th}$ column of the pilot symbol matrix is a third symbol, and an element in an $i^{th}$ row and a $j^{th}$ column of the first power allocation matrix is a power proportion of the second symbol or the third symbol. An example in which the first communication apparatus performs power superposition on a second symbol and a third symbol based on a first power allocation matrix is as follows: The first communication apparatus performs power superposition on two symbols at same locations in the data symbol matrix and the pilot symbol matrix based on the first power allocation matrix. i and j are integers greater than 0. For example, an element in an $i^{th}$ row and a $j^{th}$ column of a data symbol matrix is a second symbol, an element in an $i^{th}$ row and a $j^{th}$ column of a pilot symbol matrix is a third symbol, an element in an $i^{th}$ row and a $j^{th}$ column of a first power allocation matrix is a power proportion of the second symbol, and the first communication apparatus performs power superposition on the second symbol and the third symbol according to Formula (1). It should be understood that the first communication apparatus may perform power superposition on two symbols at same locations in the data symbol matrix and the pilot symbol matrix in a similar manner, to obtain a transmit symbol matrix including a first symbol. In other words, the first communication apparatus performs power superposition on two symbols at same locations in the data symbol matrix and the pilot symbol matrix based on the first power allocation matrix, to obtain a transmit symbol matrix including a first symbol. The first communication apparatus may perform physical resource mapping based on the transmit symbol matrix to obtain a to-be-sent signal.

In this application, a sum of power proportions of any two symbols on which power superposition is performed is 1. In this way, it can be ensured that symbols obtained through superposition have a same transmit power. For example, the first communication apparatus performs sending in a manner of performing power superposition on an adjusted data symbol and a pilot symbol. That is, power superposition is performed on each adjusted data symbol and a pilot symbol, and it is ensured that symbols obtained through superposition have a same transmit power.

In a possible implementation, the second symbol is a modulated data symbol, the third symbol is a pilot symbol, w is an element corresponding to the third symbol in the first power allocation matrix, and each element in the first power allocation matrix is a power proportion of one pilot symbol. The first communication apparatus may obtain a power proportion of a third symbol by obtaining an element corresponding to the third symbol in the first power allocation matrix. In this implementation, the first power allocation matrix includes only the power proportion of the pilot symbol. Because a sum of a power proportion of each pilot symbol and a power proportion of an adjusted data symbol corresponding to the pilot symbol is 1, the first communication apparatus may correspondingly determine, based on the power proportion of each pilot symbol, the power proportion of the adjusted data symbol corresponding to the pilot symbol. The adjusted data symbol corresponding to each pilot symbol is a data symbol on which power superposition is performed with the pilot symbol. For example, K1 elements in a first power allocation matrix are in one-to-one correspondence with K1 pilot symbols in a pilot symbol matrix, an element corresponding to each pilot symbol in the first power allocation matrix is a power proportion of the pilot symbol, and K1 is an integer greater than 0. For example, both the first power allocation matrix and the pilot symbol matrix are matrices with F1 rows and H1 columns, and elements at same locations in the first power allocation matrix and the pilot symbol matrix are in one-to-one correspondence. Both F1 and H1 are integers greater than 1.

In a possible implementation, the second symbol is a modulated data symbol, the third symbol is a pilot symbol, (1-w) is an element corresponding to the second symbol in the first power allocation matrix, and each element in the first power allocation matrix is a power proportion of one modulated data symbol. The first communication apparatus may obtain a power proportion of a second symbol by obtaining an element corresponding to the second symbol in the first power allocation matrix. In this implementation, the first power allocation matrix includes only the power proportion of the modulated data symbol. Because a sum of a power proportion of each modulated data symbol and a power proportion of a pilot symbol corresponding to the modulated data symbol is 1, the first communication apparatus may correspondingly determine, based on the power proportion of each modulated data symbol, the power proportion of the pilot symbol corresponding to the modulated data symbol. The pilot symbol corresponding to each adjusted data symbol is a pilot symbol on which power superposition is performed with the modulated data symbol. For example, K2 elements in a first power allocation matrix are in one-to-one correspondence with K2 to-be-sent adjusted data symbols, an element corresponding to each modulated data symbol in the first power allocation matrix is a power proportion of the modulated data symbol, and K2 is an integer greater than 0.

In a possible implementation, the second symbol is a modulated data symbol, the third symbol is a pilot symbol, w is an element corresponding to the third symbol in the first power allocation matrix, (1-w) is an element corresponding to the second symbol in the first power allocation matrix, and any element in the first power allocation matrix is a power proportion of one pilot symbol or one modulated data symbol. The first communication apparatus may obtain a power proportion of a second symbol by obtaining an element corresponding to the second symbol in the first power allocation matrix, and may obtain a power proportion of a third symbol by obtaining an element corresponding to the third symbol in the first power allocation matrix. Optionally, first power allocation is a matrix with F2 rows and H2 columns, each element in a $1^{st}$ row to an $F3^{th}$ row is a power proportion of one pilot symbol, and each element in an $(F3+1)^{th}$ row to an $F2^{th}$ row is a power proportion of one modulated data symbol. F2 is an integer greater than 1, F3 and H2 are both integers greater than 0, and F3 is less than F2. For example, the first power allocation matrix is a matrix with eight rows and eight columns, the pilot symbol matrix is a matrix with four rows and eight columns, and the data symbol matrix is a matrix with four rows and eight columns. Each element in a $1^{st}$ row to a $4^{th}$ row in the first power allocation matrix is a power proportion of one pilot symbol, each element in a $5^{th}$ row to an $8^{th}$ row in the first power allocation matrix is a power proportion of one modulated data symbol, elements in the $1^{st}$ row to the $4^{th}$ row in the first power matrix are in one-to-one correspondence with elements in the pilot symbol matrix, and elements in the $5^{th}$ row to the $8^{th}$ row in the first power matrix are in one-to-one correspondence with elements in the data symbol matrix. Optionally, the first power allocation is a matrix with F4 rows and H4 columns, each element in a $1^{st}$ column to an $H5^{th}$ column is a power proportion of one pilot symbol, and each element in an $(H5+1)^{th}$ column to an $H4^{th}$ column is a power proportion of one modulated data symbol. H4 is an integer greater than 1, F4 and H5 are both integers greater than 0, and H5 is less than H4. For example, the first power allocation matrix is a matrix with eight rows and eight columns, the pilot symbol matrix is a matrix with eight rows and four columns, and the data symbol matrix is a matrix with eight rows and four columns. Each element in a $1^{st}$ column to a $4^{th}$ column in the first power allocation matrix is a power proportion of one pilot symbol, each element in a $5^{th}$ column to an $8^{th}$ column in the first power allocation matrix is a power proportion of one modulated data symbol, elements in the $1^{st}$ column to the $4^{th}$ column in the first power matrix are in one-to-one correspondence with elements in the pilot symbol matrix, and elements in the $5^{th}$ column to the $8^{th}$ column in the first power matrix are in one-to-one correspondence with elements in the data symbol matrix.

In this embodiment of this application, the manner of performing power superposition on the two symbols is described by using an example in which power superposition is performed on the second symbol and the third symbol based on the first power allocation matrix. The first symbol may include only a symbol obtained by performing superposition processing on the second symbol and the third symbol, or may include a symbol obtained by performing superposition processing on the second symbol and the third symbol and a symbol obtained by performing superposition processing on other symbols. For example, the first symbol includes F symbols, each of the F symbols is obtained by performing superposition processing on two symbols, and F is an integer greater than 1. For example, the first symbol includes F symbols, and each symbol is obtained by performing superposition processing on one modulated data symbol and one pilot symbol. The first symbol may be used for processing to obtain one or more data symbols, or may be used to implement channel estimation, signal synchronization, or the like. That the first communication apparatus sends a first signal obtained by performing physical resource mapping on the first symbol is equivalent to that the first communication apparatus sends a signal obtained by performing physical resource mapping on the data symbol and the pilot symbol independently. In a conventional transmitter, the pilot symbol and the data symbol are sent independently. On a receiving side, a receiver performs channel estimation by independently using the pilot symbol, and performs channel equalization on the data symbol through an interpolated estimated channel. In this embodiment of this application, the first communication apparatus performs sending in the manner of performing power superposition on the modulated data symbol and the pilot symbol, that is, sends the symbol obtained by performing power superposition on the modulated data symbol and the pilot symbol. FIG. 6 is an example of a diagram of comparison between subframes according to an embodiment of this application. In FIG. 6, a left part is a subframe (subframe) sent by a conventional transmitter, and a right part is a subframe sent by the transmitter provided in this application. s represents a modulated data symbol, P represents a pilot symbol, and x represents a symbol (for example, a first symbol) obtained by performing power superposition on s and P. The first symbol may be any x in FIG. 6, or may include a plurality of x. For example, the first symbol includes one row of x or one column of x.

It can be learned from FIG. 6 that, in the subframe sent by the conventional transmitter, a modulated data symbol and a pilot symbol occupy independent time-frequency resources (that is, each pilot symbol independently occupies one time-frequency resource), and in the subframe sent by the transmitter provided in this application, x obtained by performing power superposition on a modulated data symbol and a pilot symbol occupies one time-frequency resource (that is, each pilot symbol does not independently occupy one time-frequency resource).

It can be learned from FIG. 6 that the subframe sent by the conventional transmitter includes one column of pilot symbols, and the subframe sent by the transmitter provided in this application corresponds to one or more columns of pilot symbols. Compared with conventional pilot solutions, the communication solutions provided in this embodiment of this application can pre-extend a length of a pilot sequence, for example, to all physical resources. A to-be-sent signal is generated by using the pre-extended pilot sequence, so that channel estimation is more accurate.

In a possible implementation, a longer pilot sequence (for example, a pseudo-random pilot sequence) is regenerated. For example, an existing pilot sequence includes two pilot symbols, and a regenerated pilot sequence includes 32, 48, 64, and the like pilot symbols.

In another possible implementation, an existing pilot sequence is copied to other physical resources. For example, different orthogonal frequency division multiplexing (orthogonal frequency division multiplexing, OFDM) symbols correspond to a same pilot sequence.

In still another possible implementation, cyclic shift of pilot symbols of different OFDM symbols corresponds to time-frequency domain orthogonal superposition of pilot symbols at different layers (layers).

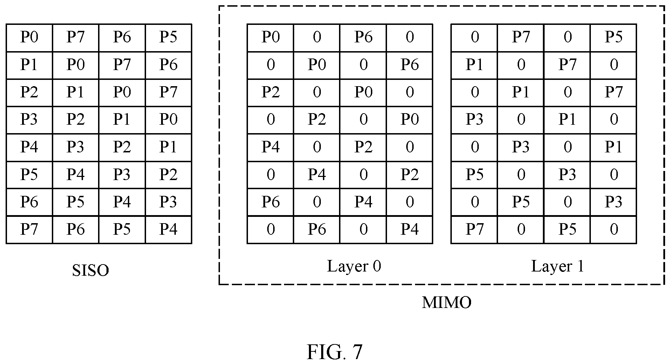

FIG. 7 is an example of two types of pilot symbol matrices according to an embodiment of this application. In FIG. 7, a matrix on the left is an example of a pilot symbol matrix used when a transmitter sends a signal by using a single-input single-output (single-input single-output, SISO) system, and a matrix on the right is an example of a pilot symbol matrix used when the transmitter sends a signal by using a multiple-input multiple-output (multiple-input multiple-output, MIMO) system. As shown in FIG. 7, each column in the pilot symbol matrix on the left may correspond to one OFDM symbol, and pilot symbols of different OFDM symbols are cyclically shifted. The pilot symbol matrix on the right includes a first matrix and a second matrix. The first matrix corresponds to a layer 0, the second matrix corresponds to a layer 1, M pilot symbols in the first matrix are in one-to-one correspondence with M time-frequency resources, M pilot symbols in the second matrix are in one-to-one correspondence with M time-frequency resources, and the time-frequency resources corresponding to the M pilot symbols in the first matrix are orthogonal to the time-frequency resources corresponding to the M pilot symbols in the second matrix. The layer 0 represents space domain resources (or referred to as spatial-domain resources) of the layer 0, the layer 1 represents space domain resources of the layer 1, and the layer 0 is different from the layer 1. As shown in FIG. 7, pilot symbols in the pilot symbol matrix used when the transmitter sends the signal by using the MIMO satisfy the following formulas:

$$a_{k,l,p} = A_p \times r(m) \quad (2);$$

$$m = (k - l) mod K \quad (3);$$

and

$$A_p = \begin{cases} 1, (k-l) mod P = p \\ 0, otherwise \end{cases} \quad (4).$$

$a_{k,l,p}$ represents an $l^{th}$ OFDM symbol on a $k^{th}$ subcarrier. $r(m)$ represents an $m^{th}$ pilot symbol in a pseudo-random sequence (namely, a pilot sequence), the pseudo-random sequence includes N pilot symbols, a value of m is from 0 to (N-1), and N is an integer greater than 1. K and P respectively represent a maximum quantity of subcarriers and a maximum quantity of data layers. For example, K is 8, and P is 2. A mod B indicates that a remainder obtained by dividing A by B is returned. This result has a same sign as this divisor. Formula (4) indicates that if $(k - l) mod P = p$, $A_p$ is equal to 1; otherwise, $A_p$ is 0, and $k$, $l$, and $p$ are all integers greater than or equal to 0. In a possible implementation, K is 8, P is 2, and, $k$, $l$ and $p$ are all integers greater than or equal to 0. The first communication apparatus substitutes $k$, $l$, and $p$ into the foregoing Formulas (2) to (4) for calculation to obtain $a_{k,l,p}$ corresponding to each combination of $k$, $l$, and $p$, and the pilot symbol matrix shown in FIG. 7 is finally obtained.

502: The first communication apparatus performs physical resource mapping on the first symbol, to obtain the first signal.

The first signal may be obtained by performing physical resource mapping on the first symbol, or may be obtained by performing physical resource mapping on the first symbol and another symbol. In a possible implementation, the first communication apparatus may perform physical resource mapping on a plurality of symbols (including the first symbol) to obtain a first signal. For example, the first symbol includes one x, one column of x, or one row of x in the subframes in FIG. 6, and a signal obtained by performing physical resource mapping on the first symbol is a part of the first signal. For another example, the first symbol includes all x in the subframe in FIG. 6, and a first signal is obtained by performing physical resource mapping on the first symbol.

503: The first communication apparatus sends the first signal to the second communication apparatus.

In a possible implementation, the first communication apparatus is an access network device, and the second communication apparatus is a terminal. Before sending the first signal to the second communication apparatus, the first communication apparatus sends first indication information to the second communication apparatus, where the first indication information indicates the first power allocation matrix. The first power allocation matrix may be a power allocation matrix preconfigured by the first communication apparatus, or may be a power allocation matrix obtained through joint training by the first communication apparatus and the second communication apparatus, or may be any one of several power allocation matrices obtained through pre-training based on a configuration of a receiver, a channel, a resource patch configuration, and the like of the second communication apparatus. In this implementation, the first communication apparatus sends the first indication information to the second communication apparatus, so that the second communication apparatus receives the first signal based on the first power allocation matrix.

504: The second communication apparatus obtains the one or more data symbols based on the first power allocation matrix and the first signal.

In a possible implementation, the second communication apparatus receives the first signal based on the first power allocation matrix through an algorithm procedure of a conventional receiver, for example, channel estimation, channel equalization, detection, and channel decoding, to obtain a data symbol carried in the first signal. Further, the second communication apparatus may perform processing based on the one or more data symbols to obtain a bitstream sent by the first communication apparatus.

In a possible implementation, the receiver used by the second communication apparatus is an AI receiver (a receiver with a training and inference capability). Before the first communication apparatus sends the first signal to the second communication apparatus, the first communication apparatus and the second communication apparatus have completed the joint training. Before sending the first signal to the second communication apparatus, the first communication apparatus may send third indication information to the second communication apparatus, where the third indication information indicates a second neural network. Step 504 may be replaced with: The second communication apparatus obtains the one or more data symbols based on the second neural network and the first signal.

In this embodiment of this application, the first communication apparatus performs power superposition on the second symbol and the third symbol based on the first power allocation matrix, to obtain the first symbol; and performs physical resource mapping on the first symbol, to obtain the first signal, and sends the first signal to the second communication apparatus. This can reduce a transmit power of the pilot symbol and increase a throughput.

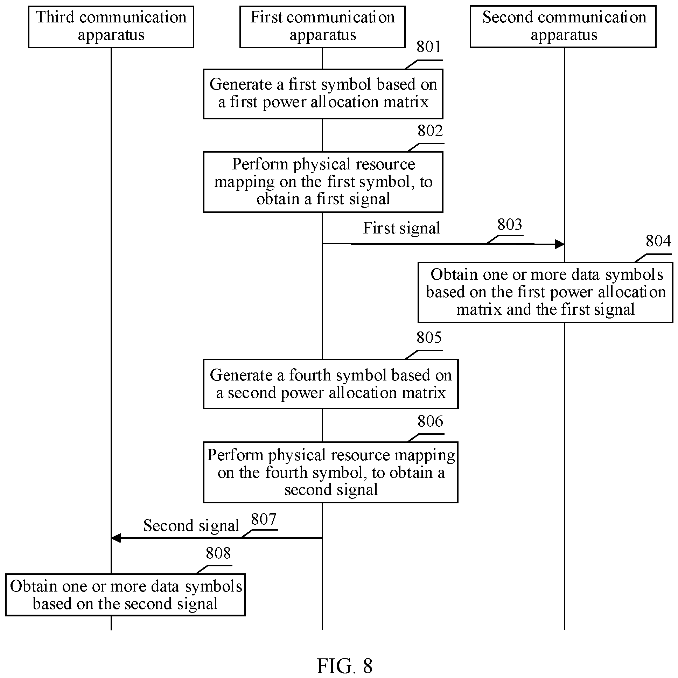

FIG. 8 is an interaction diagram of another communication method according to an embodiment of this application. A method procedure in FIG. 8 is a possible implementation of the method described in FIG. 3. In this implementation, when sending a signal to different receive ends, the first communication apparatus performs power superposition on a modulated data symbol and a pilot symbol based on different power allocation matrices, so that the different receive ends can accurately receive the signal sent by the first communication apparatus. As shown in FIG. 8, the method includes the following steps.

801: The first communication apparatus generates a first symbol based on a first power allocation matrix.

The first symbol may include a symbol obtained by performing power superposition on a second symbol and a third symbol, or may include one or more symbols obtained by performing power superposition on other symbols. The second symbol is a modulated data symbol, and the third symbol is a pilot symbol.

A possible implementation of step 801 is as follows: The first communication apparatus generates the first symbol based on the second symbol and a pilot symbol matrix. The third symbol is included in the pilot symbol matrix. That the first communication apparatus generates the first symbol based on the second symbol and a pilot symbol matrix may include: The first communication apparatus generates the first symbol based on the second symbol, the pilot symbol matrix, and the first power allocation matrix. For example, the first communication apparatus performs power superposition on the second symbol and the third symbol based on the first power allocation matrix, to obtain the first symbol. Orders of elements in any two columns or any two rows in the pilot symbol matrix are different (refer to a matrix on the left in FIG. 7). Alternatively, the pilot symbol matrix (refer to a matrix on the right in FIG. 7) includes a first matrix and a second matrix, the first matrix and the second matrix correspond to different space domains, M pilot symbols in the first matrix are in one-to-one correspondence with M time-frequency resources, M pilot symbols in the second matrix are in one-to-one correspondence with M time-frequency resources, the time-frequency resources corresponding to the M pilot symbols in the first matrix are orthogonal to the time-frequency resources corresponding to the M pilot symbols in the second matrix, and M is an integer greater than 0.

Another possible implementation of step 801 is as follows: The first communication apparatus generates the first symbol based on a first group of to-be-sent modulated data symbols, the pilot symbol matrix, and the first power allocation matrix. The first group of modulated data symbols includes a plurality of modulated data symbols, the first symbol includes a plurality of symbols obtained by performing power superposition on the modulated data symbols and pilot symbols, each modulated data symbol included in the first group of modulated data symbols corresponds to one pilot symbol in the pilot symbol matrix, and the first power allocation matrix indicates a power proportion of each modulated data symbol included in the first group of modulated data symbols and/or a power proportion of each pilot symbol in the pilot symbol matrix. An example in which the symbol obtained by performing power superposition on the second symbol and the third symbol is a symbol included in the first symbol is used. The first communication apparatus may perform, based on the first power allocation matrix, power superposition on each modulated data symbol included in the first group of modulated data symbols and a pilot symbol corresponding to the modulated data symbol, to obtain the first symbol. For example, the first communication apparatus determines power proportions of the second symbol and the third symbol based on the first power allocation matrix, and then performs power superposition on the second symbol and the third symbol based on the power proportions of the second symbol and the third symbol. Refer to Formula (1).

802: The first communication apparatus performs physical resource mapping on the first symbol, to obtain a first signal.

803: The first communication apparatus sends the first signal to a second communication apparatus. Correspondingly, the second communication apparatus receives the first signal.

804: The second communication apparatus obtains one or more data symbols based on the first power allocation matrix and the first signal.

In a possible implementation, the first communication apparatus is an access network device, and the second communication apparatus is a terminal. Before sending the first signal to the second communication apparatus, the first communication apparatus sends first indication information to the second communication apparatus, where the first indication information indicates the first power allocation matrix.

In a possible implementation, the first communication apparatus is a terminal, and the second communication apparatus is an access network device. Before performing step 801, the first communication apparatus receives second indication information from the second communication apparatus, where the second indication information indicates the first power allocation matrix. The first communication apparatus determines, based on the first indication information, to generate the first symbol based on the first power allocation matrix.

805: The first communication apparatus generates a fourth symbol based on a second power allocation matrix.

The fourth symbol includes a fifth symbol and a sixth symbol. The fourth symbol is obtained by performing power superposition on a plurality of symbols based on the second power allocation matrix, the second power allocation matrix is different from the first power allocation matrix, and the plurality of symbols include the fifth symbol and the sixth symbol.

In a possible implementation, the fifth symbol is a modulated data symbol, and the sixth symbol is a pilot symbol. An element corresponding to the fifth symbol in the second power allocation matrix is 1, and an element corresponding to a pilot symbol that is in the second power allocation matrix and that corresponds to the fifth symbol is 0; and an element corresponding to the sixth symbol in the second power allocation matrix is 1, and an element corresponding to a modulated data symbol that is in the second power allocation matrix and that corresponds to the sixth symbol is 0. The fifth symbol included in the fourth symbol may be obtained by performing, based on the second power allocation matrix, power superposition on the fifth symbol and a pilot symbol (not the sixth symbol) corresponding to the fifth symbol. The sixth symbol included in the fourth symbol may be obtained by performing, based on the second power allocation matrix, power superposition on the sixth symbol and a modulated data symbol (not the fifth symbol) corresponding to the sixth symbol. Refer to Formula (1). It can be learned that when w is 0, x=s; when w is 1, x=P; or when w is greater than 0 and less than 1,

$$\mathrm{x}=\sqrt{1-w} \times s + \sqrt{w} \times P$$ . A symbol obtained by performing power superposition on two symbols by the first communication apparatus based on the power allocation matrix may be either of the two symbols. For example, an element corresponding to a fifth symbol in the second power allocation matrix is 1, and an element corresponding to a sixth symbol in the second power allocation matrix is 1. The first communication apparatus performs power superposition on the fifth symbol (a power proportion is 1) and a pilot symbol corresponding to the fifth symbol to obtain the fifth symbol, and the first communication apparatus performs power superposition on the sixth symbol and a modulated data symbol corresponding to the sixth symbol to obtain the sixth symbol.

It should be understood that a symbol obtained by performing power superposition on a plurality of symbols by the first communication apparatus based on the second power allocation matrix may include a modulated data symbol and a pilot symbol. For example, the first communication apparatus may perform power superposition on a plurality of symbols based on the second power allocation matrix to obtain a subframe on the left in FIG. 6. In other words, the subframe obtained by performing power superposition on the plurality of symbols by the first communication apparatus by using the second power allocation matrix is the same as a subframe sent by a conventional transmitter. It can be learned that a transmitter used by the first communication apparatus may be directly compatible with a conventional receiver. The first communication apparatus may be configured with the first power allocation matrix, the second power allocation matrix, and another power allocation matrix. The first communication apparatus may perform power superposition on the modulated data symbol and the pilot symbol based on an actual requirement (for example, a configuration of a receiver) by using a power allocation matrix.

A possible implementation of step 805 is as follows: The first communication apparatus generates the fourth symbol based on a second group of to-be-sent modulated data symbols, the pilot symbol matrix, and the second power allocation matrix. The second group of modulated data symbols includes a plurality of modulated data symbols, the fourth symbol includes a plurality of symbols obtained by performing power superposition on the modulated data symbols and pilot symbols, each modulated data symbol included in the second group of modulated data symbols corresponds to one pilot symbol in the pilot symbol matrix, and the second power allocation matrix indicates a power proportion of each modulated data symbol included in the second group of modulated data symbols and/or a power proportion of each pilot symbol in the pilot symbol matrix. The first communication apparatus may perform, based on the second power allocation matrix, power superposition on each modulated data symbol included in the second group of modulated data symbols and a pilot symbol corresponding to the modulated data symbol, to obtain the fourth symbol. For example, the first communication apparatus performs power superposition on a fifth symbol (a power proportion is 1) and a pilot symbol corresponding to the fifth symbol to obtain the fifth symbol, and the first communication apparatus performs power superposition on a sixth symbol (a power proportion is 1) and a modulated data symbol corresponding to the sixth symbol to obtain the sixth symbol.

806: The first communication apparatus performs physical resource mapping on the fourth symbol, to obtain a second signal.

807: The first communication apparatus sends the second signal to a third communication apparatus.

The third communication apparatus is the same as or different from the second communication apparatus.

808: The third communication apparatus obtains one or more data symbols based on the second signal.

Step 801 to step 804 are a procedure in which the first communication apparatus generates the first signal and sends the first signal to the second communication apparatus. Step 805 to step 808 are a procedure in which the first communication apparatus generates the second signal and sends the second signal to the third communication apparatus. A sequence of the two procedures is not limited.

In this embodiment of this application, the first communication apparatus generates the first symbol based on the first power allocation matrix, and generates the fourth symbol based on the second power allocation matrix; and this manner of generating the symbol by the first communication apparatus may be compatible with an existing manner of generating the symbol. In addition, the first communication apparatus sends the first signal to the second communication apparatus, so that a throughput can be increased, and a transmit power of the pilot symbol can be reduced.

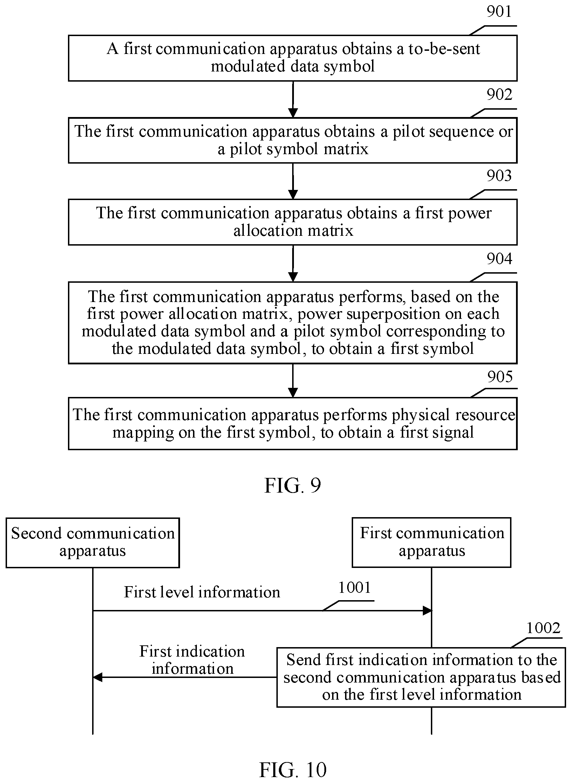

A manner of generating the first signal is not described in detail in the foregoing embodiment. The following describes, with reference to the accompanying drawings, a possible implementation of generating the first signal. FIG. 9 is a flowchart of another communication method according to an embodiment of this application. A method procedure in FIG. 9 describes a possible implementation of generating a first signal. In this implementation, power superposition is first performed based on a power allocation matrix on a modulated data symbol and a pilot symbol corresponding to the modulated data symbol, and a first signal is then generated by using a symbol obtained through power superposition. As shown in FIG. 9, the method includes the following steps.

901: A first communication apparatus obtains a to-be-sent modulated data symbol.

The first communication apparatus may perform source encoding (optional), channel encoding, modulation, and the like on a to-be-sent bitstream, to obtain the to-be-sent modulated data symbol. The first communication apparatus may alternatively obtain the to-be-sent modulated data symbol in another manner. This is not limited in this embodiment of this application.

902: The first communication apparatus obtains a pilot sequence or a pilot symbol matrix.

The pilot sequence or the pilot symbol matrix includes a pilot symbol corresponding to each modulated data symbol.

903: The first communication apparatus obtains a first power allocation matrix.

904: The first communication apparatus performs, based on the first power allocation matrix, power superposition on each modulated data symbol and the pilot symbol corresponding to the modulated data symbol, to obtain a first symbol.

The first communication apparatus may perform, based on the first power allocation matrix according to Formula (1), power superposition on each modulated data symbol and the pilot symbol corresponding to the modulated data symbol.

905: The first communication apparatus performs physical resource mapping on the first symbol, to obtain the first signal.

In this embodiment of this application, the first communication apparatus performs, based on the first power allocation matrix, power superposition on each modulated data symbol and the pilot symbol corresponding to the modulated data symbol, to obtain the first symbol. The first symbol is obtained by performing superposition on the modulated data symbol and the pilot symbol, and the pilot symbol does not need to independently occupy a time-frequency resource. The first signal is sent, so that a transmit power of the pilot symbol can be reduced, and a throughput can be increased.

Before the first communication apparatus and a second communication apparatus perform the method procedure in FIG. 5 or FIG. 8, the first communication apparatus needs to obtain the first power allocation matrix or indicate the first power allocation matrix to the second communication apparatus. It should be understood that before performing the method procedure in FIG. 5 or FIG. 8, the first communication apparatus and the second communication apparatus need to exchange power allocation matrix information. The following describes, with reference to the accompanying drawings, possible implementations in which the first communication apparatus and the second communication apparatus exchange the power allocation matrix information.

FIG. 10 is a diagram of a method for exchanging power allocation matrix information according to an embodiment of this application. As shown in FIG. 10, the method includes the following steps.

1001: A second communication apparatus sends first level information to a first communication apparatus. Correspondingly, the first communication apparatus receives the first level information.

The second communication apparatus is a terminal, and the first communication apparatus is an access network device. The first level information indicates a level of a receiver used by the second communication apparatus.

In a possible implementation, the receiver has three levels. 0 represents a conventional receiver that cannot participate in training. 1 represents a conventional receiver that can participate in the training. 2 represents an AI receiver that can be used for training and inference. The first level information indicates that the level of the receiver used by the second communication apparatus is 0 or 1.

In a possible implementation, the receiver has two levels. One is a conventional receiver, that is, cannot participate in training, and the other is an AI receiver with a training and inference function. The first level information indicates that the receiver used by the second communication apparatus is the conventional receiver.

A possible implementation of step 1001 is as follows: In response to a first level reporting request from the first communication apparatus, the second communication apparatus sends the first level information to the first communication apparatus. The first level reporting request is for requesting the second communication apparatus to report a level of a receiver used by the second communication apparatus.

1002: The first communication apparatus sends first indication information to the second communication apparatus based on the first level information.

The first indication information indicates a first power allocation matrix.

In this embodiment of this application, the first communication apparatus sends the first indication information to the second communication apparatus based on the first level information, so that the second communication apparatus receives, by using the first power allocation matrix, a signal sent by the first communication apparatus.

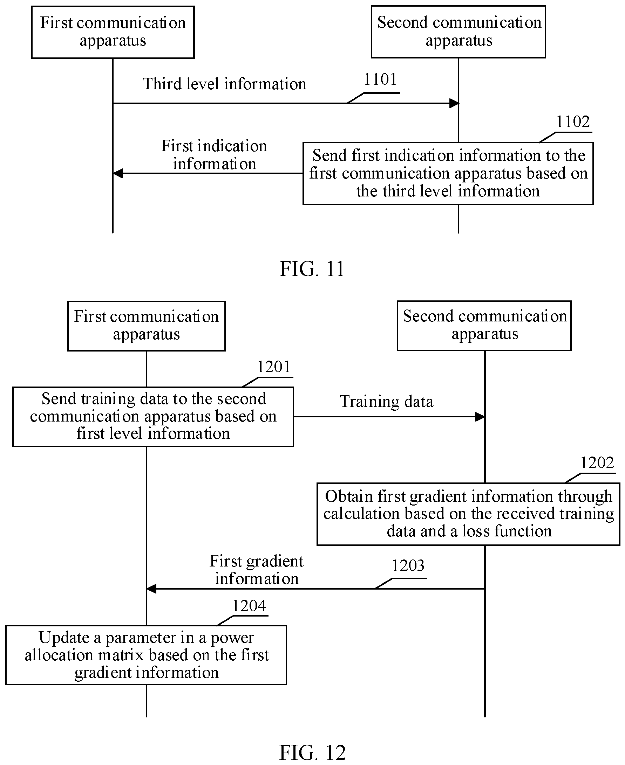

FIG. 11 is a diagram of another method for exchanging power allocation matrix information according to an embodiment of this application. As shown in FIG. 11, the method includes the following steps.

1101: A first communication apparatus sends third level information to a second communication apparatus.

The first communication apparatus is a terminal, and the second communication apparatus is an access network device. The third level information indicates a level of a transmitter used by the first communication apparatus. Alternatively, the third level information indicates that the first communication apparatus uses a power superposition transmitter, and the power superposition transmitter is a transmitter that generates a signal based on a power allocation matrix.

1102: The second communication apparatus sends first indication information to the first communication apparatus based on the third level information.

The first indication information indicates a first power allocation matrix.

In a possible implementation, the transmitter has three levels. 0 represents a conventional transmitter, 1 represents the power superposition transmitter. 2 represents an AI transmitter. The conventional transmitter does not have a training and inference function. The AI transmitter has a training and inference function. The third level information indicates that the level of the transmitter used by the first communication apparatus is 1.

The first communication apparatus may obtain the first power allocation matrix based on the first indication information, and perform power superposition based on the first power allocation matrix to obtain a first symbol.

In this embodiment of this application, the second communication apparatus sends the first indication information to the first communication apparatus based on the third level information, so that the first communication apparatus transmits the signal by using the power superposition transmitter.

The power allocation matrix (for example, the first power allocation matrix) used by the first communication apparatus and the second communication apparatus may be preconfigured, or may be obtained through joint training by the first communication apparatus and the second communication apparatus. The following describes, with reference to the accompanying drawings, an example in which the first communication apparatus and the second communication apparatus obtain the first power allocation matrix through the joint training.

FIG. 12 is an interaction diagram of a method for training a power allocation matrix according to an embodiment of this application. As shown in FIG. 12, the method includes the following steps.

1201: A first communication apparatus sends training data to a second communication apparatus based on first level information. Correspondingly, the second communication apparatus receives the training data.

The first level information indicates that a receiver used by the second communication apparatus has a capability of participating in updating a power allocation matrix. Alternatively, the first level information indicates that a level of a receiver used by the second communication apparatus is 1 or 2.

A possible implementation of step 1201 is as follows: The first communication apparatus determines, based on the first level information, that a receiver used by the second communication apparatus has a capability of participating in updating a power allocation matrix. The first communication apparatus initializes a parameter in the power allocation matrix. The first communication apparatus generates training data (or referred to as a training signal) based on the initialized power allocation matrix, and sends the training data to the second communication apparatus.

In a possible implementation, before performing step 1201, the first communication apparatus performs the following operation: The first communication apparatus sends a second level reporting request to the second communication apparatus, where the second level reporting request is for requesting the second communication apparatus to report whether the receiver used by the second communication apparatus has the capability of participating in updating the power allocation matrix; and receives the first level information from the second communication apparatus.

1202: The second communication apparatus obtains first gradient information through calculation based on the received training data and a loss function.

The loss function may be a mean square error, a cross entropy, or the like. A possible implementation of step 1202 is as follows: The second communication apparatus calculates, based on a bitstream obtained by processing the received training data, an annotated bitstream, and the loss function, a loss value corresponding to the training data; obtains the first gradient information through calculation based on the loss value corresponding to the training data. The annotated bitstream may be understood as a bitstream that the first communication apparatus expects the second communication apparatus to obtain by processing the received training data.

1203: The second communication apparatus sends first gradient information to the first communication apparatus. Correspondingly, the first communication apparatus receives the first gradient information.

1204: The first communication apparatus updates a parameter in the power allocation matrix based on the first gradient information.

The first communication apparatus may update the parameter in the power allocation matrix based on the first gradient information. In actual application, the first communication apparatus and the second communication apparatus may repeatedly perform step 1201 to step 1204 until the loss value obtained by the second communication apparatus through calculation based on the loss function is less than a loss threshold. When the loss value obtained by the second communication apparatus through calculation based on the loss function is less than the loss threshold, the power allocation matrix in the first communication apparatus is a converged first power allocation matrix.

A method procedure in FIG. 12 describes a procedure in which the first communication apparatus (used as an access network device) updates the parameter in the power allocation matrix used by the transmitter of the first communication apparatus, and finally obtains the first power allocation matrix through training. In the method procedure in FIG. 12, an operation performed by the first communication apparatus may be considered as an operation performed by the access network device, and an operation performed by the second communication apparatus may be considered as an operation performed by a terminal. In some embodiments, the first communication apparatus and the second communication apparatus in FIG. 12 may be replaced with each other. In other words, the second communication apparatus may perform an operation performed by the access network device, and the first communication apparatus may perform an operation performed by a terminal.

In this embodiment of this application, the first communication apparatus and the second communication apparatus obtain the first power allocation matrix through joint training, so that the power allocation matrix applicable to the first communication apparatus can be quickly and accurately obtained.

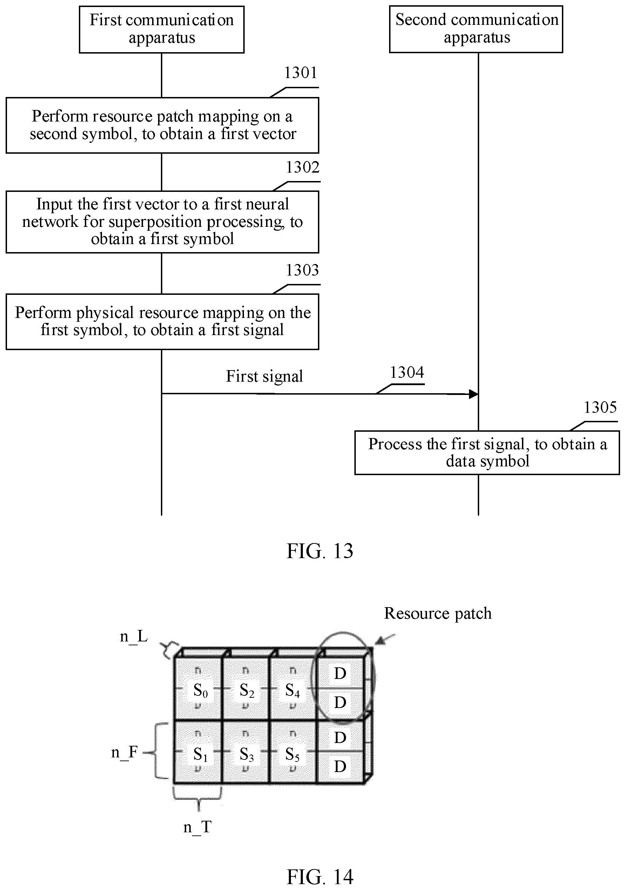

FIG. 13 is an interaction diagram of another communication method according to an embodiment of this application. A method procedure in FIG. 13 is a possible implementation of the method described in FIG. 3. In this implementation, a vector obtained by performing resource patch mapping on a modulated data symbol is input to a neural network for superposition processing, to obtain a to-be-sent symbol; and a to-be-sent signal is generated based on the to-be-sent symbol. As shown in FIG. 13, the method includes the following steps.

1301: A first communication apparatus performs resource patch mapping on a second symbol, to obtain a first vector.

In a possible implementation, the second symbol is a modulated data symbol, and the first vector is a vector.

In a possible implementation, the second symbol includes a plurality of modulated data symbols, and the first vector includes a plurality of vectors. Step 1301 may be understood as follows: The first communication apparatus separately performs resource patch mapping on the plurality of modulated data symbols, to obtain the plurality of vectors (namely, the first vector). The plurality of vectors are in one-to-one correspondence with the plurality of modulated data symbols.

A resource patch (resource patch) is a virtual resource granularity, and as a minimum granularity for structure processing in the neural network in this application, is a subset of scheduled physical resources. FIG. 14 is a diagram of a resource patch according to an embodiment of this application. As shown in FIG. 14, a configuration of a resource patch includes three parameters ($n\_F$, $n\_T$, and $n\_L$), respectively representing granularities in frequency, time, and space dimensions. The configuration of the resource patch is related to an available computing resource of a receiver and a time-frequency correlation of a channel. A larger computing resource indicates a smaller size ($n\_F*n\_T*n\_L$) of the resource patch, a greater time, frequency, or space domain correlation, and a larger parameter configuration in the corresponding dimension. The configuration of the resource patch of a transceiver needs to be synchronized to obtain excellent performance. Performing resource patch mapping on a modulated data symbol may be mapping the modulated data symbol to a vector representing the configuration ($n\_F$, $n\_T$, and $n\_L$) of the resource patch. It should be understood that, different modulated data symbols may be mapped to different ($n\_F$, $n\_T$, and $n\_L$).

1302: The first communication apparatus inputs a first vector to a first neural network for superposition processing, to obtain a first symbol.

A quantity of symbols included in the first symbol may be equal to a quantity of modulated data symbols to be sent by the first communication apparatus. For example, the second symbol to be sent by the first communication apparatus includes N modulated data symbols, the first symbol obtained by inputting, by the first communication apparatus, the first vector to the first neural network for the superposition processing includes N symbols, and each symbol occupies one time-frequency resource. The first neural network is obtained through pre-training.

In a possible implementation, the first neural network includes a first network layer, a second network layer, and a third network layer. An input of the first network layer is a first vector, the first vector includes N vectors, and each vector is obtained by performing resource patch mapping on one modulated data symbol. N is an integer greater than 0. An output of the first network layer is a first intermediate vector, and the first intermediate vector includes N higher-dimension vectors obtained by performing linear mapping on the N vectors, and a second vector. The second vector may include one or more preset vectors, or may include one or more vectors obtained through training, or may include a vector obtained by performing linear mapping on a vector representing a third symbol. In a possible implementation, the third symbol is a pilot symbol or another symbol, and the second vector is a vector representing the third symbol. In a possible implementation, the third symbol includes a plurality of pilot symbols and/or other symbols (for example, data symbols), the second vector includes a plurality of vectors, and each of the plurality of vectors represents one symbol included in the third symbol. An input of the second network layer is a first intermediate vector. An output of the second network layer is a second intermediate vector. The second network layer may be an attention layer, and the second intermediate vector is a high-dimensional representation of an output signal obtained after interaction of the first intermediate vector through the attention layer. An input of the third network layer is a second intermediate vector. An output of the third network layer is a first symbol.

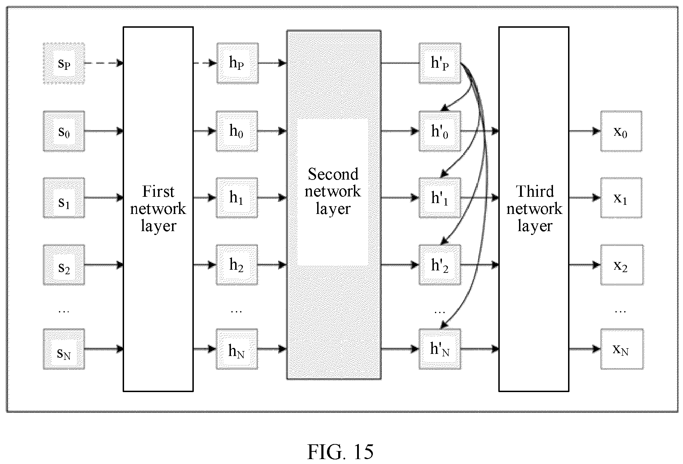

FIG. 15 is a diagram of a structure of a first neural network according to an embodiment of this application. As shown in FIG. 15, an input of a first network layer includes $s_0$, $s_1$, ..., $s_N$, and $s_p$ (optional), $s_0$, $s_1$, ..., and $s_N$ are N vectors included in a first vector, and $s_p$ is a vector representing a third symbol; an output of the first network layer includes $h_0$, $h_1$, ..., $h_N$, and $h_p$, where $h_0$, $h_1$, ..., and $h_N$ are N higher-dimension vectors obtained by performing linear mapping on $s_0$, $s_1$, ..., and $s_N$, $h_p$ is a second vector, and the second vector may be obtained by performing linear mapping on $s_p$, or may be preset, or may be obtained through training; an input of a second network layer is the output of the first network layer; an output of the second network layer includes $h'_p$, $h'_0$, $h'_1$, ..., and $h'_N$, where $h'_p$, $h'_0$, $h'1$, ..., and $h'_N$ are vectors included in a second intermediate vector respectively; an input of a third network layer is the output of the second network layer; and an output of the third network layer includes $x_0$, $x_1$, ..., and $x_N$, where $x_0$, $x_1$, ..., and $x_N$ are N symbols included in a first symbol. A function of the first network layer may be understood as mapping an input vector to a higher-dimension vector, that is, performing dimension increasing. A function of the second network layer may be understood as extracting a feature between input vectors and extracting a feature in each input vector. A feature between vectors may include a feature between $h_0$ and $h_1$. A feature in a vector may include a feature in $h_0$. A function of the third network layer may be understood as mapping an input vector to a lower-dimension vector, that is, performing dimension reduction. In FIG. 15, $s_p$ is optional. In other words, the input of the first network layer may include $s_0$, $s_1$, ..., $s_N$, and $s_p$, or may include only $s_0$, $s_1$, ..., and $s_N$.

Because the functions of both the first network layer and the third network layer in the first neural network are to perform linear mapping, the first neural network may not include the first network layer and/or the third network layer. The functions of the first network layer and/or the third network layer may be replaced by the first communication apparatus in another manner. For example, after performing linear mapping on the N vectors included in the first vector to obtain the N higher-dimension vectors ($h_p$, $h_0$, $h_1$, ..., and $h_N$), the first communication apparatus inputs the N higher-dimension vectors and the second vector to the first neural network; the first neural network outputs a second intermediate vector ($h'_p$, $h'_0$, $h'_1$, ..., $h'_N$, $h'_p$, $h'_0$, $h'_1$, ..., and $h'_N$); and the first communication apparatus performs linear mapping on the second intermediate vector to obtain a first symbol.

In a possible implementation, the first communication apparatus is a terminal, and a second communication apparatus is an access network device. Before performing step 1302, the first communication apparatus performs the following operation: receiving first model information from the second communication apparatus; and obtaining a first neural network based on the first model information. Optionally, the first model information indicates the first neural network; and the obtaining a first neural network based on the first model information may include: The first communication apparatus determines, based on the first model information, to send a signal to the second communication apparatus by using the first neural network. For example, the first model information includes an identifier of the first neural network. The first communication apparatus may generate a signal by using the first neural network or another neural network; and may determine, based on the first model information, to generate, by using the first neural network, a signal to be sent to the second communication apparatus. Optionally, the first model information includes information needed by the first communication apparatus to obtain the first neural network. For example, the first communication apparatus may directly obtain the first neural network based on the first model information. In other words, the first communication apparatus is not configured with the first neural network, and generates or configures the first neural network based on the first model information.

Optionally, the first model information indicates a to-be-trained neural network. The first communication apparatus and the second communication apparatus jointly train the to-be-trained neural network to obtain the first neural network.

Optionally, the first model information includes information needed by the first communication apparatus to obtain a to-be-trained neural network, and the first communication apparatus may directly obtain the to-be-trained neural network based on the first model information. The first communication apparatus and the second communication apparatus may jointly train the to-be-trained neural network to obtain the first neural network.

1303: The first communication apparatus performs physical resource mapping on the first symbol, to obtain a first signal.

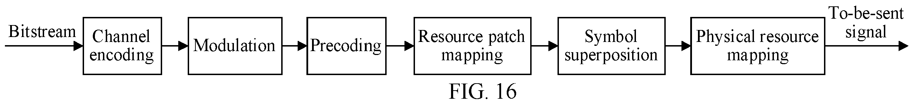

In a possible implementation, a procedure in which the first communication apparatus processes a to-be-sent bitstream to obtain the first vector includes: channel encoding, modulation, precoding (optional), and resource patch mapping. An operation of inputting, by the first communication apparatus, the first vector to the first neural network for the superposition processing on the first symbol may be referred to as symbol superposition. In other words, the first communication apparatus may perform symbol superposition on the first vector to obtain the first symbol. FIG. 16 is a flowchart of processing a to-be-sent bitstream to obtain a to-be-sent signal according to an embodiment of this application. Refer to FIG. 16. A procedure in which the first communication apparatus obtains a first signal by processing the to-be-sent bitstream may include: channel encoding, modulation, precoding (optional), resource patch mapping, symbol superposition, and physical resource mapping.

1304: The first communication apparatus sends the first signal to the second communication apparatus. Correspondingly, the second communication apparatus receives the first signal.

1305: The second communication apparatus processes the first signal, to obtain a data symbol.

A possible implementation of step 1305 is as follows: The second communication apparatus obtains the data symbol based on the first signal and a second neural network. In a possible implementation, the first communication apparatus is an access network device, and the second communication apparatus is a terminal. Before performing step 1304, the first communication apparatus performs the following operation: sending third indication information to the second communication apparatus, where the third indication information indicates a second neural network or the first neural network, and the second neural network is used by the second communication apparatus to receive the signal generated by the first communication apparatus by using the first neural network. The second communication apparatus may determine, based on the third indication information, to receive, by using the second neural network, the signal sent by the first communication apparatus to the second communication apparatus. A receiver used by the second communication apparatus may be an AI receiver.

A possible implementation of step 1305 is as follows: The second communication apparatus performs processing based on the first signal by using a conventional receiver, to obtain the data symbol.

After processing the first signal to obtain the data symbol, the second communication apparatus may further process the obtained data symbol to obtain a bitstream.

In this embodiment of this application, the first communication apparatus inputs the first vector to the first neural network for the superposition processing, to obtain the first symbol; and performs physical resource mapping on the first symbol, to obtain the first signal. The first signal is sent, so that a throughput can be improved.

In a possible implementation, the first communication apparatus is a terminal, and the second communication apparatus is an access network device. Before performing the method procedure in FIG. 13, the first communication apparatus needs to obtain the first neural network. The following describes, with reference to the accompanying drawings, a method procedure in which the first communication apparatus obtains the first neural network.

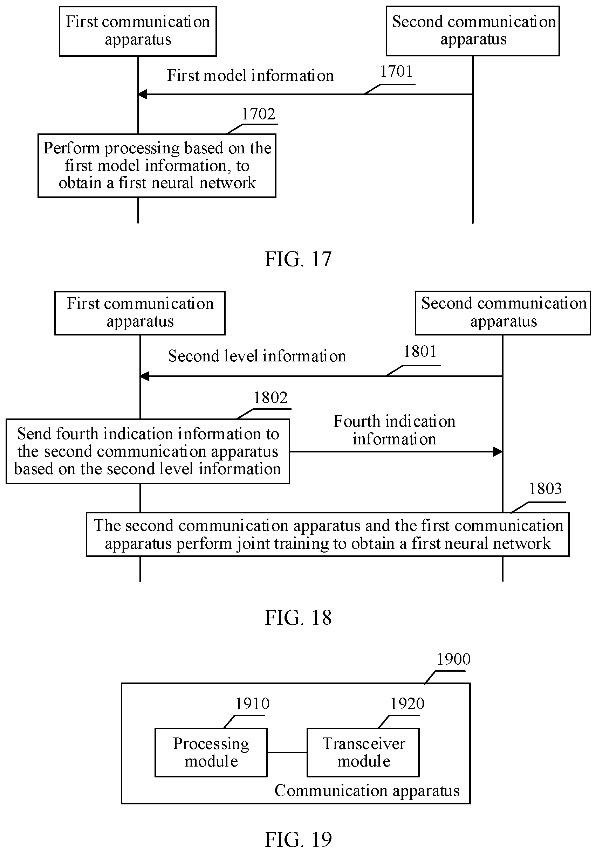

FIG. 17 is an interaction diagram of another communication method according to an embodiment of this application. A method procedure in FIG. 17 is a possible implementation in which a first communication apparatus obtains a first neural network. In this implementation, the first communication apparatus receives first model information from a second communication apparatus, and performs processing based on the first model information to obtain the first neural network. As shown in FIG. 17, the method includes the following steps.

1701: The second communication apparatus sends the first model information to the first communication apparatus. Correspondingly, the first communication apparatus receives the first model information.

The second communication apparatus is an access network device, and the first communication apparatus is a terminal. The first model information is used by the second communication apparatus to obtain the first neural network.

In a possible implementation, before sending the first model information to the first communication apparatus, the second communication apparatus receives fourth level information from the first communication apparatus, where the fourth level information indicates that a transmitter used by the first communication apparatus is an AI transmitter. The second communication apparatus sends the first model information to the first communication apparatus based on the fourth level information. For example, the transmitter has three levels. 0 represents a conventional transmitter. 1 represents a power superposition transmitter. 2 represents the AI transmitter. The fourth level information indicates that a level of the transmitter used by the first communication apparatus is 2.

1702: The first communication apparatus performs processing based on the first model information, to obtain the first neural network.

In a possible implementation, the first model information includes all information needed by the first communication apparatus to generate the first neural network, and the first communication apparatus generates the first neural network based on the first model information.

In another possible implementation, the first model information includes an identifier of the first neural network, and the first neural network is preconfigured in the first communication apparatus. The first communication apparatus determines, based on the first model information, to generate, by using the first neural network, a signal to be sent to the second communication apparatus.

In another possible implementation, the first model information indicates a to-be-trained neural network. The first communication apparatus and the second communication apparatus jointly train the to-be-trained neural network to obtain the first neural network. An example in which the first communication apparatus and the second communication apparatus jointly train the to-be-trained neural network is as follows: The first communication apparatus generates a first training signal by using the to-be-trained neural network, and sends the first training signal to the second communication apparatus. The second communication apparatus performs processing based on the received first training signal and a loss function, to obtain third gradient information. The first communication apparatus updates a parameter in the to-be-trained neural network based on the third gradient information from the second communication apparatus. It should be understood that the first communication apparatus and the second communication apparatus may perform operations in the foregoing example for a plurality of times until the to-be-trained neural network converges.

In this embodiment of this application, the first communication apparatus performs processing based on the first model information, to obtain the first neural network, to generate the to-be-sent signal by using the first neural network. The first communication apparatus generates the to-be-sent signal by using the first neural network, so that a throughput can be improved.

In a possible implementation, the first communication apparatus is an access network device, and the second communication apparatus is a terminal. Before performing the method procedure in FIG. 13, the first communication apparatus needs to obtain the first neural network. The following describes, with reference to the accompanying drawings, a method procedure in which the first communication apparatus obtains the first neural network.

FIG. 18 is an interaction diagram of another communication method according to an embodiment of this application. A method procedure in FIG. 18 is a possible implementation in which a first communication apparatus obtains a first neural network. In this implementation, the first communication apparatus and a second communication apparatus perform joint training to obtain the first neural network. As shown in FIG. 18, the method includes the following steps.

1801: The second communication apparatus sends second level information to the first communication apparatus.

The second level information indicates that a receiver used by the second communication apparatus has a capability of participating in neural network training.

A possible implementation of step 1801 is as follows: In response to a third level reporting request from the first communication apparatus, the second communication apparatus sends the second level information to the first communication apparatus. The third level reporting request is for requesting the second communication apparatus to report a level of a receiver used by the second communication apparatus.

1802: The first communication apparatus sends fourth indication information to the second communication apparatus based on the second level information.

The fourth indication information indicates that the second communication apparatus and the first communication apparatus jointly train the first neural network.

In a possible implementation, the receiver has three levels. 0 represents a conventional receiver that cannot participate in training. 1 represents a conventional receiver that can participate in the training, for example, a backhaul gradient can be directly calculated in closed form. 2 represents an AI receiver that can be used for training and inference. The second level information indicates that the level of the receiver used by the second communication apparatus is 0 or 1.

In a possible implementation, the receiver has two levels. One is a conventional receiver, that is, cannot participate in training, and the other is an AI receiver with a training and inference function. The first level information indicates that the receiver used by the second communication apparatus is the AI receiver.

1803: The second communication apparatus and the first communication apparatus perform joint training to obtain the first neural network.

The first neural network is a neural network of a transmitter used by the first communication apparatus.

An example in which the second communication apparatus and the first communication apparatus perform joint training to obtain the first neural network is as follows: The second communication apparatus is the conventional receiver that can participate in the training. The first communication apparatus generates a first training signal by using a to-be-trained neural network, and sends the first training signal to the second communication apparatus. The second communication apparatus performs processing based on the received first training signal and a loss function, to obtain second gradient information. The first communication apparatus updates a parameter in the to-be-trained neural network based on the second gradient information from the second communication apparatus. It should be understood that the first communication apparatus and the second communication apparatus may perform operations in the foregoing example for a plurality of times until the to-be-trained neural network converges.

An example in which the second communication apparatus and the first communication apparatus perform joint training to obtain the first neural network is as follows: The second communication apparatus is the AI receiver. The first communication apparatus generates a second training signal by using the first neural network, and sends the second training signal to the second communication apparatus. The second communication apparatus receives the second training signal from the first communication apparatus by using a second neural network (namely, a neural network used by the AI receiver). The second communication apparatus performs processing based on the received second training signal and a loss function, to obtain second gradient information. The second communication apparatus updates a parameter in the second neural network. The first communication apparatus updates a parameter in the first neural network based on the second gradient information from the second communication apparatus. It should be understood that the first communication apparatus and the second communication apparatus may perform operations in the foregoing example for a plurality of times until the first neural network and the second neural network converge.

In this embodiment of this application, the second communication apparatus and the first communication apparatus perform j oint training to obtain the first neural network, to generate the to-be-sent signal by using the first neural network. The first communication apparatus generates the to-be-sent signal by using the first neural network, so that a throughput can be improved.

The following describes, with reference to the accompanying drawings, structures of communication apparatuses that can implement the communication methods provided in embodiments of this application.

FIG. 19 is a diagram of a structure of a communication apparatus 1900 according to an embodiment of this application. The communication apparatus 1900 can correspondingly implement functions or steps implemented by the communication apparatuses (for example, the first communication apparatus and the second communication apparatus) in the foregoing method embodiments. The communication apparatus may include a processing module 1910 and a transceiver module 1920. Optionally, a storage unit may be further included. The storage unit may be configured to store instructions (code or a program) and/or data. The processing module 1910 and the transceiver module 1920 may be coupled to the storage unit. For example, the processing module 1910 may read the instructions (the code or the program) and/or the data in the storage unit, to implement a corresponding method. The foregoing units may be independently disposed, or may be partially or completely integrated. For example, the transceiver module 1920 may include a sending module and a receiving module. The sending module may be a transmitter, and the receiving module may be a receiver. An entity corresponding to the transceiver module 1920 may be a transceiver.

In some possible implementations, the communication apparatus 1900 can correspondingly implement behavior and functions of the first communication apparatus in the foregoing method embodiments. For example, the communication apparatus 1900 may be the first communication apparatus, or may be a component (for example, a chip or a circuit) used in the first communication apparatus. For example, the transceiver module 1920 may be configured to perform all receiving or sending operations performed by the first communication apparatus in the embodiments shown in FIG. 3, FIG. 5, FIG. 8, FIG. 10, FIG. 11, FIG. 12, FIG. 13, FIG. 17, and FIG. 18, for example, step 302 in the embodiment shown in FIG. 3, step 503 in the embodiment shown in FIG. 5, step 803 and step 807 in the embodiment shown in FIG. 8, step 1001 and step 1002 in the embodiment shown in FIG. 10, step 1101 and step 1102 in the embodiment shown in FIG. 11, step 1201 and step 1203 in the embodiment shown in FIG. 12, step 1304 in the embodiment shown in FIG. 13, step 1701 in the embodiment shown in FIG. 17, step 1801 and step 1802 in the embodiment shown in FIG. 18, and/or another process used to support this technology described in this specification. The processing module 1910 is configured to perform all operations, except the receiving and sending operations, performed by the first communication apparatus in the embodiments shown in FIG. 3, FIG. 5, FIG. 8, FIG. 9, FIG. 12, FIG. 13, FIG. 17, and FIG. 18, for example, step 301 in the embodiment shown in FIG. 3, step 501 and step 502 in the embodiment shown in FIG. 5, step 801, step 802, step 805, and step 806 in the embodiment shown in FIG. 8, step 901 to step 905 in the embodiment shown in FIG. 9, step 1201 and step 1204 in the embodiment shown in FIG. 12, step 1301, step 1302, and step 1303 in the embodiment shown in FIG. 13, step 1702 in the embodiment shown in FIG. 17, and step 1802 and step 1803 in the embodiment shown in FIG. 18.

In some possible implementations, the communication apparatus 1900 can correspondingly implement behavior and functions of the second communication apparatus in the foregoing method embodiments. For example, the communication apparatus 1900 may be the second communication apparatus, or may be a component (for example, a chip or a circuit) used in the second communication apparatus. For example, the transceiver module 1920 may be configured to perform all receiving or sending operations performed by the second communication apparatus in the embodiments shown in FIG. 3, FIG. 5, FIG. 8, FIG. 10, FIG. 11, FIG. 12, FIG. 13, FIG. 17, and FIG. 18, for example, step 302 in the embodiment shown in FIG. 3, step 503 in the embodiment shown in FIG. 5, step 803 and step 807 in the embodiment shown in FIG. 8, step 1001 and step 1002 in the embodiment shown in FIG. 10, step 1101 and step 1102 in the embodiment shown in FIG. 11, step 1201 and step 1203 in the embodiment shown in FIG. 12, step 1304 in the embodiment shown in FIG. 13, step 1701 in the embodiment shown in FIG. 17, step 1801 and step 1802 in the embodiment shown in FIG. 18, and/or another process used to support this technology described in this specification. The processing module 1910 is configured to perform all operations, except the receiving and sending operations, performed by the second communication apparatus in the embodiments shown in FIG. 3, FIG. 5, FIG. 8, FIG. 10, FIG. 11, FIG. 12, FIG. 13, and FIG. 18, for example, step 303 in the embodiment shown in FIG. 3, step 504 in the embodiment shown in FIG. 5, step 804 and step 808 in the embodiment shown in FIG. 8, step 1002 in the embodiment shown in FIG. 10, step 1102 in the embodiment shown in FIG. 11, step 1202 in the embodiment shown in FIG. 12, step 1305 in the embodiment shown in FIG. 13, and step 1803 in the embodiment shown in FIG. 18.

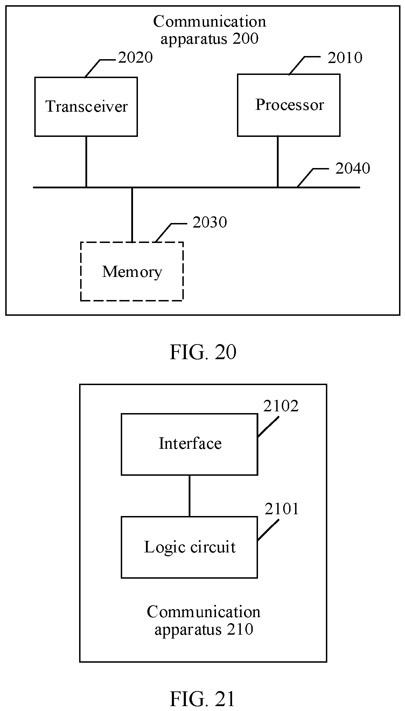

FIG. 20 is a diagram of a structure of another communication apparatus 200 according to an embodiment of this application. The communication apparatus in FIG. 20 may be the foregoing first communication apparatus. The communication apparatus in FIG. 20 may be the foregoing second communication apparatus.

As shown in FIG. 20, the communication apparatus 200 includes at least one processor 2010 and a transceiver 2020.

In some other embodiments of this application, the processor 2010 and the transceiver 2020 may be configured to perform a function, an operation, or the like performed by the first communication apparatus. For example, the processor 2010 may perform one or more of the following operations: step 301 in the embodiment shown in FIG. 3, step 501 and step 502 in the embodiment shown in FIG. 5, step 801, step 802, step 805, and step 806 in the embodiment shown in FIG. 8, step 901 to step 905 in the embodiment shown in FIG. 9, step 1201 and step 1204 in the embodiment shown in FIG. 12, step 1301, step 1302, and step 1303 in the embodiment shown in FIG. 13, step 1702 in the embodiment shown in FIG. 17, and step 1802 and step 1803 in the embodiment shown in FIG. 18. For example, the transceiver 2020 may perform one or more of the following operations: step 302 in the embodiment shown in FIG. 3, step 503 in the embodiment shown in FIG. 5, step 803 and step 807 in the embodiment shown in FIG. 8, step 1001 and step 1002 in the embodiment shown in FIG. 10, step 1101 and step 1102 in the embodiment shown in FIG. 11, step 1201 and step 1203 in the embodiment shown in FIG. 12, step 1304 in the embodiment shown in FIG. 13, step 1701 in the embodiment shown in FIG. 17, and step 1801 and step 1802 in the embodiment shown in FIG. 18.

In some other embodiments of this application, the processor 2010 and the transceiver 2020 may be configured to perform a function, an operation, or the like performed by the second communication apparatus. For example, the processor 2010 may perform one or more of the following operations: step 303 in the embodiment shown in FIG. 3, step 504 in the embodiment shown in FIG. 5, step 804 and step 808 in the embodiment shown in FIG. 8, step 1002 in the embodiment shown in FIG. 10, step 1102 in the embodiment shown in FIG. 11, step 1202 in the embodiment shown in FIG. 12, step 1305 in the embodiment shown in FIG. 13, and step 1803 in the embodiment shown in FIG. 18. For example, the transceiver 2020 may perform one or more of the following operations: step 302 in the embodiment shown in FIG. 3, step 503 in the embodiment shown in FIG. 5, step 803 and step 807 in the embodiment shown in FIG. 8, step 1001 and step 1002 in the embodiment shown in FIG. 10, step 1101 and step 1102 in the embodiment shown in FIG. 11, step 1201 and step 1203 in the embodiment shown in FIG. 12, step 1304 in the embodiment shown in FIG. 13, step 1701 in the embodiment shown in FIG. 17, and step 1801 and step 1802 in the embodiment shown in FIG. 18.

The transceiver 2020 is configured to communicate with another device/apparatus through a transmission medium. The processor 2010 receives and sends data and/or signaling by using the transceiver 2020, and is configured to implement the method in the foregoing method embodiments. The processor 2010 may implement a function of the processing module 1910, and the transceiver 2020 may implement a function of the transceiver module 1920.

Optionally, the communication apparatus 200 may further include at least one memory 2030, configured to store program instructions and/or data. The memory 2030 is coupled to the processor 2010. The coupling in this embodiment of this application may be an indirect coupling or a communication connection between apparatuses, units, or modules in an electrical form, a mechanical form, or another form, and is used for information exchange between the apparatuses, the units, or the modules. The processor 2010 may cooperate with the memory 2030. The processor 2010 may execute the program instructions stored in the memory 2030. At least one of the at least one memory may be included in the processor.

A specific connection medium between the transceiver 2020, the processor 2010, and the memory 2030 is not limited in this embodiment of this application. In this embodiment of this application, the memory 2030, the processor 2010, and the transceiver 2020 are connected through a bus 2040 in FIG. 20. The bus is represented by using a bold line in FIG. 20. A manner of connection between other components is merely an example for description, and is not limited thereto. The bus may be classified into an address bus, a data bus, a control bus, and the like. For ease of representation, only one bold line represents the bus in FIG. 20, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps in the methods disclosed with reference to embodiments of this application may be directly performed and completed by a hardware processor, or may be performed and completed by a combination of hardware in the processor and a software module.

FIG. 21 is a diagram of a structure of another communication apparatus 210 according to an embodiment of this application. As shown in FIG. 21, the communication apparatus shown in FIG. 21 includes a logic circuit 2101 and an interface 2102. The processing module 1910 in FIG. 19 may be implemented by using the logic circuit 2101, and the transceiver module 1920 in FIG. 19 may be implemented by using the interface 2102. The logic circuit 2101 may be a chip, a processing circuit, an integrated circuit, a system-on-a-chip (system-on-a-chip, SoC), or the like, and the interface 2102 may be a communication interface, an input/output interface, or the like. In this embodiment of this application, the logic circuit and the interface may be coupled to each other. A specific manner of connection between the logic circuit and the interface is not limited in this embodiment of this application.

In some embodiments of this application, the logic circuit and the interface may be configured to perform a function, an operation, or the like performed by the first communication apparatus.

In some other embodiments of this application, the logic circuit and the interface may be configured to perform a function, an operation, or the like performed by the second communication apparatus.

This application further provides a computer-readable storage medium. The computer-readable storage medium stores a computer program or instructions. When the computer program or the instructions are run on a computer, the computer is enabled to perform the method in the foregoing embodiment.

This application further provides a computer program product. The computer program product includes instructions or a computer program. When the instructions or the computer program is run on a computer, the communication method in the foregoing embodiment is performed.

This application further provides a communication system, including the foregoing first communication apparatus and the foregoing second communication apparatus.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   generating, by a first communication apparatus, a first signal based on a first symbol, wherein the first symbol is obtained by performing superposition processing on a second symbol and a third symbol, and the second symbol is a modulated data symbol; and
   sending, by the first communication apparatus, the first signal, wherein the first signal is obtained by performing physical resource mapping on the first symbol.

2. The method according to claim 1, wherein the first symbol is obtained by performing power superposition on the second symbol and the third symbol.

3. The method according to claim 2, wherein the first symbol is obtained by performing power superposition on the second symbol and the third symbol based on a first power allocation matrix, wherein the first power allocation matrix indicates a power proportion of the second symbol and/or a power proportion of the third symbol.

4. The method according to claim 3, wherein before the sending, by the first communication apparatus, the first signal, the method further comprises:

sending, by the first communication apparatus, first indication information to a second communication apparatus, wherein the first indication information indicates the first power allocation matrix; and
the sending, by the first communication apparatus, the first signal comprises:
sending, by the first communication apparatus, the first signal to the second communication apparatus.

5. The method according to claim 3, wherein before the sending, by the first communication apparatus, the first signal, the method further comprises:
receiving, by the first communication apparatus, second indication information from a second communication apparatus, wherein the second indication information indicates the first power allocation matrix.

6. The method according to any one of claims 3 to 5, wherein the method further comprises:
sending, by the first communication apparatus, a second signal, wherein the second signal is obtained by performing physical resource mapping on a fourth symbol, the fourth symbol comprises a fifth symbol and a sixth symbol, the fourth symbol is obtained by performing power superposition on a plurality of symbols based on a second power allocation matrix, and the second power allocation matrix is different from the first power allocation matrix.

7. The method according to claim 6, wherein the fifth symbol is a modulated data symbol, the sixth symbol is a pilot symbol, and an element corresponding to the sixth symbol in the second power allocation matrix is 1.

8. The method according to any one of claims 1 to 7, wherein before the generating, by a first communication apparatus, a first signal, the method further comprises:
generating, by the first communication apparatus, the first symbol based on the second symbol and a pilot symbol matrix, wherein the third symbol is comprised in the pilot symbol matrix; and orders of elements in any two columns or any two rows in the pilot symbol matrix are different, or the pilot symbol matrix comprises a first matrix and a second matrix, the first matrix and the second matrix correspond to different space domains, M pilot symbols in the first matrix are in one-to-one correspondence with M time-frequency resources, M pilot symbols in the second matrix are in one-to-one correspondence with M time-frequency resources, the time-frequency resources corresponding to the M pilot symbols in the first matrix are orthogonal to the time-frequency resources corresponding to the M pilot symbols in the second matrix, and M is an integer greater than 0.

9. The method according to claim 1, wherein the first symbol is obtained by inputting a first vector representing the second symbol to a first neural network for superposition processing.

10. The method according to claim 9, wherein the first vector is obtained by performing resource patch mapping on the second symbol.

11. The method according to claim 9 or 10, wherein the method further comprises:

receiving, by the first communication apparatus, first model information from a second communication apparatus; and
obtaining, by the first communication apparatus, the first neural network based on the first model information.

12. The method according to any one of claims 1 to 11, wherein before the sending, by the first communication apparatus, the first signal, the method further comprises:

sending, by the first communication apparatus, third indication information to the second communication apparatus, wherein the third indication information indicates a second neural network, and the second neural network is used by the second communication apparatus to receive the signal generated by the first communication apparatus by using the first neural network; and
the sending, by the first communication apparatus, the first signal comprises:
sending, by the first communication apparatus, the first signal to the second communication apparatus.

13. The method according to claim 3 or 4, wherein the method further comprises:

sending, by the first communication apparatus, training data to the second communication apparatus based on first level information, wherein the first level information indicates that a receiver used by the second communication apparatus has a capability of participating in updating a power allocation matrix; and

obtaining, by the first communication apparatus, the first power allocation matrix based on first gradient information from the second communication apparatus, wherein the first gradient information is obtained by performing processing by the second communication apparatus based on the training data.

14. The method according to claim 9 or 10, wherein the method further comprises:
sending, by the first communication apparatus, fourth indication information to a second communication apparatus based on second level information, wherein the second level information indicates that a receiver used by the second communication apparatus has a capability of participating in neural network training, and the fourth indication information indicates that the second communication apparatus and the first communication apparatus jointly train the first neural network.

15. The method according to any one of claims 1 to 14, wherein the first symbol comprises H symbols, each of the H symbols corresponds to one time-frequency resource, at least one of the H symbols is obtained by performing superposition processing on one modulated data symbol and one pilot symbol, the third symbol is a pilot symbol, and H is an integer greater than 1.

16. The method according to any one of claims 1 to 15, wherein before the sending, by the first communication apparatus, the first signal, the method further comprises:
sending, by the first communication apparatus, pilot indication information to the second communication apparatus, wherein the pilot indication information indicates a pilot sequence or a pilot symbol matrix, and the pilot sequence or the pilot symbol matrix is used by the second communication apparatus to receive the first signal.

17. The method according to any one of claims 1 to 15, wherein before the sending, by the first communication apparatus, the first signal, the method further comprises:
receiving, by the first communication apparatus, pilot indication information from the second communication apparatus, wherein the pilot indication information indicates a pilot sequence or a pilot symbol matrix, and the pilot sequence or the pilot symbol matrix is used by the first communication apparatus to generate the first signal.

18. The method according to claim 16 or 17, wherein the pilot indication information comprises an identifier of the pilot sequence or an identifier of the pilot symbol matrix.

19. The method according to claim 4, wherein the first indication information comprises information used to generate the first power allocation matrix.

20. The method according to claim 19, wherein a value of an element corresponding to a pilot symbol in the first power allocation matrix is 0 or a first power proportion, wherein the first indication information comprises the first power proportion, a start location and a spacing of a subcarrier, and a start location and a spacing of the symbol.

21. The method according to claim 4, 19, or 20, wherein the sending, by the first communication apparatus, first indication information to a second communication apparatus comprises:
sending, by the first communication apparatus, the first indication information to the second communication apparatus based on first capability information, wherein the first capability information indicates that a receiver used by the second communication apparatus is a conventional receiver or a receiver that can participate in training.

22. The method according to any one of claims 1 to 21, wherein the method further comprises:

sending, by the first communication apparatus, fifth indication information and the training data to the second communication apparatus based on second capability information, wherein the second capability information indicates that the receiver used by the second communication apparatus has a training and inference function or the capability of participating in updating the power allocation matrix, and the fifth indication information indicates a third power allocation matrix; and

updating, by the first communication apparatus, the third power allocation matrix to the first power allocation matrix based on the gradient information from the second communication apparatus, wherein the gradient information is obtained by performing processing by the second communication apparatus based on the third power allocation matrix and the training data.

23. The method according to claim 12, wherein the sending, by the first communication apparatus, third indication information to the second communication apparatus comprises:
sending, by the first communication apparatus, the third indication information to the second communication apparatus based on third capability information, wherein the third capability information is used to determine that a receiver used by the second communication apparatus has a training and inference function and/or a capability of participating in neural network training.

24. A communication method, comprising:

receiving, by a second communication apparatus, a first signal, wherein the first signal is obtained by performing physical resource mapping on a first symbol, the first symbol is obtained by performing superposition processing on a second symbol and a third symbol, and the second symbol is a modulated data symbol; and
obtaining, by the second communication apparatus, the data symbol based on the first signal.

25. The method according to claim 24, wherein the first symbol is obtained by performing power superposition on the second symbol and the third symbol based on a first power allocation matrix, and the first power allocation matrix indicates a power proportion of the second symbol and/or a power proportion of the third symbol; before the receiving, by a second communication apparatus, a first signal, the method further comprises:

receiving, by the second communication apparatus, first indication information from a first communication apparatus, wherein the first indication information indicates the first power allocation matrix; and
the obtaining, by the second communication apparatus, the data symbol based on the first signal comprises:
obtaining, by the second communication apparatus, the data symbol based on the first signal and the first power allocation matrix.

26. The method according to claim 24, wherein the first symbol is obtained by performing power superposition on the second symbol and the third symbol based on a first power allocation matrix, and the first power allocation matrix indicates a power proportion of the second symbol and/or a power proportion of the third symbol; and the method further comprises:
sending, by the second communication apparatus, first indication information to a first communication apparatus, wherein the first indication information indicates the first power allocation matrix.

27. The method according to claim 24, wherein the method further comprises:

receiving, by the second communication apparatus, training data from a first communication apparatus; and
sending, by the second communication apparatus, first gradient information to the first communication apparatus, wherein the first gradient information is used by the first communication apparatus to perform processing to obtain a first power allocation matrix, and the first gradient information is obtained by performing processing by the second communication apparatus based on the training data.

28. The method according to claim 24, wherein the first symbol is obtained by inputting a first vector representing the second symbol to a first neural network for superposition processing; and the method further comprises:

receiving, by the second communication apparatus, fourth indication information from a first communication apparatus, wherein the fourth indication information indicates that the second communication apparatus and the first communication apparatus jointly train the first neural network; and
sending, by the second communication apparatus, second gradient information to the first communication apparatus, wherein the second gradient information is used to update the first neural network, and the second gradient information is obtained by the second communication apparatus based on training data from the first communication apparatus.

29. The method according to claim 24, wherein the first symbol is obtained by inputting a first vector representing the second symbol to a first neural network for superposition processing; and the method further comprises:
sending, by the second communication apparatus, first model information to a first communication apparatus, wherein the first model information is used by the second communication apparatus to obtain the first neural network.

30. The method according to any one of claims 24 to 29, wherein the method further comprises:

receiving, by the second communication apparatus, third indication information from the first communication apparatus, wherein the third indication information indicates a second neural network, and the second neural network is used by the second communication apparatus to receive the signal generated by the first communication apparatus by using the first neural network; and

the obtaining, by the second communication apparatus, the data symbol based on the first signal comprises: obtaining, by the second communication apparatus, the data symbol based on the first signal and the second neural network.

31. The method according to any one of claims 24 to 30, wherein the first symbol comprises H symbols, each of the H symbols corresponds to one time-frequency resource, at least one of the H symbols is obtained by performing superposition processing on one modulated data symbol and one pilot symbol, the third symbol is a pilot symbol, and H is an integer greater than 1.

32. The method according to any one of claims 24 to 31, wherein before the receiving, by a second communication apparatus, a first signal, the method further comprises:
receiving, by the second communication apparatus, pilot indication information from the first communication apparatus, wherein the pilot indication information indicates a pilot sequence or a pilot symbol matrix, and the pilot sequence or the pilot symbol matrix is used by the second communication apparatus to receive the first signal.

33. The method according to any one of claims 24 to 31, wherein the method further comprises:
sending, by the second communication apparatus, pilot indication information to the first communication apparatus, wherein the pilot indication information indicates a pilot sequence or a pilot symbol matrix, and the pilot sequence or the pilot symbol matrix is used by the first communication apparatus to generate the first signal.

34. A communication apparatus, comprising a transceiver module and a processing module, wherein

the processing module is configured to generate a first signal based on a first symbol, wherein the first symbol is obtained by performing superposition processing on a second symbol and a third symbol, and the second symbol is a modulated data symbol; and
the transceiver module is configured to send the first signal, wherein the first signal is obtained by performing physical resource mapping on the first symbol.

35. The apparatus according to claim 34, wherein the processing module is further configured to perform superposition processing on the second symbol and the third symbol, to obtain the first symbol.

36. The apparatus according to claim 34 or 35, wherein the first symbol is obtained by performing power superposition on the second symbol and the third symbol.

37. The apparatus according to claim 36, wherein the first symbol is obtained by performing power superposition on the second symbol and the third symbol based on a first power allocation matrix, wherein the first power allocation matrix indicates a power proportion of the second symbol and/or a power proportion of the third symbol.

38. The apparatus according to claim 37, wherein the processing module is further configured to send first indication information to a second communication apparatus, wherein the first indication information indicates the first power allocation matrix; and the transceiver module is specifically configured to send the first signal to the second communication apparatus.

39. The apparatus according to claim 37, wherein the transceiver module is further configured to receive second indication information from a second communication apparatus, wherein the second indication information indicates the first power allocation matrix; and the first communication apparatus is a terminal, and the second communication apparatus is an access network device.

40. The apparatus according to any one of claims 37 to 39, wherein the transceiver module is further configured to send a second signal, wherein the second signal is obtained by performing physical resource mapping on a fourth symbol, the fourth symbol comprises a fifth symbol and a sixth symbol, the fourth symbol is obtained by performing power superposition on a plurality of symbols based on a second power allocation matrix, and the second power allocation matrix is different from the first power allocation matrix.

41. The apparatus according to claim 40, wherein the fifth symbol is a modulated data symbol, the sixth symbol is a pilot symbol, and an element corresponding to the sixth symbol in the second power allocation matrix is 1.

42. The apparatus according to any one of claims 34 to 41, wherein the processing module is further configured to generate the first symbol based on the second symbol and a pilot symbol matrix, wherein the third symbol is comprised in the pilot symbol matrix; and orders of elements in any two columns or any two rows in the pilot symbol matrix are different, or the pilot symbol matrix comprises a first matrix and a second matrix, the first matrix and the second matrix correspond to different space domains, M pilot symbols in the first matrix are in one-to-one correspondence with M time-frequency resources, M pilot symbols in the second matrix are in one-to-one correspondence with M time-frequency resources, the time-frequency resources corresponding to the M pilot symbols in the first matrix are orthogonal to the time-frequency resources corresponding to the M pilot symbols in the second matrix, and M is an integer greater than 0.

43. The apparatus according to claim 34, wherein the processing module is further configured to input a first vector representing the second symbol to a first neural network for superposition processing, to obtain the first symbol.

44. The apparatus according to claim 43, wherein the processing module is further configured to perform resource patch mapping on the second symbol, to obtain the first vector.

45. The apparatus according to claim 43 or 44, wherein the transceiver module is further configured to receive first model information from a second communication apparatus, wherein the first communication apparatus is a terminal, and the second communication apparatus is an access network device; and the processing module is further configured to obtain the first neural network based on the first model information.

46. The apparatus according to any one of claims 34 to 45, wherein the transceiver module is further configured to send third indication information to the second communication apparatus, wherein the third indication information indicates a second neural network, and the second neural network is used by the second communication apparatus to receive the signal generated by the first communication apparatus by using the first neural network; and the transceiver module is specifically configured to send the first signal to the second communication apparatus.

47. The apparatus according to claim 37 or 38, wherein the processing module is further configured to: control, based on first level information, the transceiver module to send training data to the second communication apparatus, wherein the first level information indicates that a receiver used by the second communication apparatus has a capability of participating in updating a power allocation matrix; and obtain the first power allocation matrix based on first gradient information from the second communication apparatus, wherein the first gradient information is obtained by performing processing by the second communication apparatus based on the training data.

48. The apparatus according to claim 43 or 44, wherein the processing module is further configured to control, based on the second level information, the transceiver module to send fourth indication information to the second communication apparatus, wherein the second level information indicates that a receiver used by the second communication apparatus has a capability of participating in neural network training, and the fourth indication information indicates that the second communication apparatus and the first communication apparatus jointly train the first neural network.

49. The apparatus according to any one of claims 34 to 48, wherein the first symbol comprises H symbols, each of the H symbols corresponds to one time-frequency resource, at least one of the H symbols is obtained by performing superposition processing on one modulated data symbol and one pilot symbol, the third symbol is a pilot symbol, and H is an integer greater than 1.

50. The apparatus according to any one of claims 34 to 49, wherein the transceiver module is further configured to send pilot indication information to the second communication apparatus, wherein the pilot indication information indicates a pilot sequence or a pilot symbol matrix, and the pilot sequence or the pilot symbol matrix is used by the second communication apparatus to receive the first signal.

51. The apparatus according to any one of claims 34 to 49, wherein the transceiver module is further configured to receive pilot indication information from the second communication apparatus, wherein the pilot indication information indicates a pilot sequence or a pilot symbol matrix, and the pilot sequence or the pilot symbol matrix is used by the first communication apparatus to generate the first signal.

52. The apparatus according to claim 50 or 51, wherein the pilot indication information comprises an identifier of the pilot sequence or an identifier of the pilot symbol matrix.

53. The apparatus according to claim 38, wherein the first indication information comprises information used to generate the first power allocation matrix.

54. The apparatus according to claim 53, wherein a value of an element corresponding to a pilot symbol in the first power allocation matrix is 0 or a first power proportion, wherein the first indication information comprises the first power proportion, a start location and a spacing of a subcarrier, and a start location and a spacing of the symbol.

55. The apparatus according to claim 38, 53, or 54, wherein the transceiver module is specifically configured to send the first capability indication information to the second communication apparatus based on first capability information, wherein the first capability information indicates that a receiver used by the second communication apparatus is a conventional receiver or a receiver that can participate in training.

56. The apparatus according to any one of claims 34 to 55, wherein the processing module is further configured to control, based on second capability information, the transceiver module to send fifth indication information and the training data to the second communication apparatus, wherein the second capability information indicates that the receiver used by the second communication apparatus has a training and inference function or the capability of participating in updating the power allocation matrix, and the fifth indication information indicates a third power allocation matrix; and the first communication apparatus updates the third power allocation matrix to the first power allocation matrix based on the gradient information from the second communication apparatus, wherein the gradient information is obtained by performing processing by the second communication apparatus based on the third power allocation matrix and the training data.

57. The apparatus according to claim 46, wherein the transceiver module is specifically configured to send the third indication information to the second communication apparatus based on third capability information, wherein the third capability information is used to determine that a receiver used by the second communication apparatus has a training and inference function and/or a capability of participating in neural network training.

58. The apparatus according to claim 49, wherein the processing module is further configured to perform superposition processing on H modulated data symbols and one or more pilot symbols, to obtain the first symbol.

59. A communication apparatus, comprising a transceiver module and a processing module, wherein

the transceiver module is configured to receive a first signal, wherein the first signal is obtained by performing physical resource mapping on a first symbol, the first symbol is obtained by performing superposition processing on a second symbol and a third symbol, and the second symbol is a modulated data symbol; and
the processing module is configured to obtain the data symbol based on the first signal.

60. The apparatus according to claim 59, wherein the first symbol is obtained by performing power superposition on the second symbol and the third symbol based on a first power allocation matrix, and the first power allocation matrix indicates a power proportion of the second symbol and/or a power proportion of the third symbol; the transceiver module is further configured to receive first indication information from a first communication apparatus, wherein the first indication information indicates the first power allocation matrix; and the processing module is specifically configured to obtain the data symbol based on the first signal and the first power allocation matrix.

61. The apparatus according to claim 59, wherein the first symbol is obtained by performing power superposition on the second symbol and the third symbol based on a first power allocation matrix, and the first power allocation matrix indicates a power proportion of the second symbol and/or a power proportion of the third symbol; the transceiver module is further configured to send first indication information to the first communication apparatus, wherein the first indication information indicates the first power allocation matrix; and the first communication apparatus is a terminal, and a second communication apparatus is an access network device.

62. The apparatus according to claim 59, wherein the transceiver module is further configured to: receive training data from a first communication apparatus; and send first gradient information to the first communication apparatus, wherein the first gradient information is used by the first communication apparatus to perform processing to obtain a first power allocation matrix, and the first gradient information is obtained by performing processing by a second communication apparatus based on the training data.

63. The apparatus according to claim 59, wherein the first symbol is obtained by inputting a first vector representing the second symbol to a first neural network for superposition processing; and the transceiver module is further configured to: receive fourth indication information from a first communication apparatus, wherein the fourth indication information indicates that a second communication apparatus and the first communication apparatus jointly train the first neural network; and send second gradient information to the first communication apparatus, wherein the second gradient information is used to update the first neural network, and the second gradient information is obtained by the second communication apparatus based on training data from the first communication apparatus.

64. The apparatus according to claim 59, wherein the first symbol is obtained by inputting a first vector representing the second symbol to a first neural network for superposition processing; and
the transceiver module is further configured to send first model information to a first communication apparatus, wherein the first model information is used by the second communication apparatus to obtain the first neural network.

65. The apparatus according to any one of claims 59 to 64, wherein the transceiver module is further configured to receive third indication information from the first communication apparatus, wherein the third indication information indicates a second neural network, and the second neural network is used by the second communication apparatus to receive the signal generated by the first communication apparatus by using the first neural network; and the processing module is specifically configured to obtain the data symbol based on the first signal and the second neural network.

66. The apparatus according to any one of claims 59 to 65, wherein the first symbol comprises H symbols, each of the H symbols corresponds to one time-frequency resource, at least one of the H symbols is obtained by performing superposition processing on one modulated data symbol and one pilot symbol, the third symbol is a pilot symbol, and H is an integer greater than 1.

67. The apparatus according to any one of claims 59 to 66, wherein the transceiver module is further configured to receive pilot indication information from the first communication apparatus, wherein the pilot indication information indicates a pilot sequence or a pilot symbol matrix, and the pilot sequence or the pilot symbol matrix is used by the second communication apparatus to receive the first signal.

68. The apparatus according to any one of claims 59 to 66, wherein the transceiver module is further configured to send pilot indication information to the first communication apparatus, wherein the pilot indication information indicates a pilot sequence or a pilot symbol matrix, and the pilot sequence or the pilot symbol matrix is used by the first communication apparatus to generate the first signal.

69. A computer-readable storage medium, wherein the computer-readable storage medium stores a computer program, the computer program comprises program instructions, and when the program instructions are executed by a processor, the method according to any one of claims 1 to 23 or the method according to any one of claims 24 to 33 is performed.

70. A communication apparatus, comprising a processor, wherein the processor is coupled to a memory, the memory stores instructions, and the processor is configured to execute the instructions, to enable the communication apparatus to perform the method according to any one of claims 1 to 23, or to enable the communication apparatus to perform the method according to any one of claims 24 to 33.

71. A communication system, comprising the communication apparatus according to any one of claims 34 to 58 and the communication apparatus according to any one of claims 59 to 68.

72. A computer program product, wherein the computer program product comprises a computer program or instructions, and when the computer program product runs on a computer, the method according to any one of claims 1 to 23 is performed, or the method according to any one of claims 24 to 33 is performed.

73. A data processing apparatus, wherein the data processing apparatus comprises a processing circuit and an interface circuit, wherein the interface circuit is configured to: obtain data or output data; and the processing circuit is configured to perform the method according to any one of claims 1 to 23, or the processing circuit is configured to perform the method according to any one of claims 24 to 33.

**74.** A communication apparatus, wherein the communication apparatus comprises a processor, and the processor is configured to execute computer-executable instructions stored in a memory, so that the method according to any one of claims 1 to 33 is performed.

FIG. 1

FIG. 2

First communication apparatus

Second communication apparatus

301

Generate a first signal based on a first symbol, where the first symbol is obtained by performing superposition processing on a second symbol and a third symbol

First signal 302

303

Obtain one or more data symbols based on the first signal

FIG. 3

2T2R, TDL-A30, 3 km/h, NRLDPC, R0.5, SC72, and SYM14

FIG. 4A

FIG. 4B

EP 4 478 647 A1

```
┌─────────────────────┐              ┌─────────────────────┐
│  First communication│              │ Second communication│
│       apparatus     │              │      apparatus      │
└─────────────────────┘              └─────────────────────┘
            │                                   │
            │  501                              │
┌───────────────────────────────┐              │
│  Perform power superposition on a             │
│  second symbol and a third symbol             │
│  based on a first power allocation            │
│  matrix, to obtain a first symbol             │
└───────────────────────────────┘              │
            │  502                              │
┌───────────────────────────────┐              │
│ Perform physical resource mapping on          │
│ the first symbol, to obtain a first signal    │
└───────────────────────────────┘              │
            │      First signal    503          │
            │──────────────────────────────────▶│
                                          504    │
                         ┌───────────────────────────────┐
                         │  Obtain one or more data symbols
                         │  based on the first power allocation
                         │  matrix and the first signal
                         └───────────────────────────────┘
```

FIG. 5

Subframe                         Subframe

| s | P | ... | s |
| s | P | ... | s |
| s | P | ... | s |
| s | P | ... | s |
| ... | ... | ... | ... |
| s | P | ... | s |

⇒

| x | x | ... | x |
| x | x | ... | x |
| x | x | ... | x |
| x | x | ... | x |
| ... | ... | ... | ... |
| x | x | ... | x |

FIG. 6

| | | | |
|----|----|----|----|
| P0 | P7 | P6 | P5 |
| P1 | P0 | P7 | P6 |
| P2 | P1 | P0 | P7 |
| P3 | P2 | P1 | P0 |
| P4 | P3 | P2 | P1 |
| P5 | P4 | P3 | P2 |
| P6 | P5 | P4 | P3 |
| P7 | P6 | P5 | P4 |

SISO

| | | | |
|----|----|----|----|
| P0 | 0  | P6 | 0  |
| 0  | P0 | 0  | P6 |
| P2 | 0  | P0 | 0  |
| 0  | P2 | 0  | P0 |
| P4 | 0  | P2 | 0  |
| 0  | P4 | 0  | P2 |
| P6 | 0  | P4 | 0  |
| 0  | P6 | 0  | P4 |

Layer 0

| | | | |
|----|----|----|----|
| 0  | P7 | 0  | P5 |
| P1 | 0  | P7 | 0  |
| 0  | P1 | 0  | P7 |
| P3 | 0  | P1 | 0  |
| 0  | P3 | 0  | P1 |
| P5 | 0  | P3 | 0  |
| 0  | P5 | 0  | P3 |
| P7 | 0  | P5 | 0  |

Layer 1

MIMO

FIG. 7

| Third communication apparatus | First communication apparatus | | Second communication apparatus |
|---|---|---|---|

801
Generate a first symbol based on a first power allocation matrix

802
Perform physical resource mapping on the first symbol, to obtain a first signal

First signal  803 →

804
Obtain one or more data symbols based on the first power allocation matrix and the first signal

805
Generate a fourth symbol based on a second power allocation matrix

806
Perform physical resource mapping on the fourth symbol, to obtain a second signal

← Second signal  807

808
Obtain one or more data symbols based on the second signal

FIG. 8

901

A first communication apparatus obtains a to-be-sent modulated data symbol

902

The first communication apparatus obtains a pilot sequence or a pilot symbol matrix

903

The first communication apparatus obtains a first power allocation matrix

904

The first communication apparatus performs, based on the first power allocation matrix, power superposition on each modulated data symbol and a pilot symbol corresponding to the modulated data symbol, to obtain a first symbol

905

The first communication apparatus performs physical resource mapping on the first symbol, to obtain a first signal

FIG. 9

Second communication apparatus

First communication apparatus

First level information 1001

First indication information

Send first indication information to the second communication apparatus based on the first level information 1002

FIG. 10

First communication apparatus

Second communication apparatus

Third level information 1101

First indication information

1102

Send first indication information to the first communication apparatus based on the third level information

FIG. 11

First communication apparatus

Second communication apparatus

1201

Send training data to the second communication apparatus based on first level information

Training data

1202

Obtain first gradient information through calculation based on the received training data and a loss function

First gradient information 1203

1204

Update a parameter in a power allocation matrix based on the first gradient information

FIG. 12

First communication apparatus

Second communication apparatus

1301

Perform resource patch mapping on a second symbol, to obtain a first vector

1302

Input the first vector to a first neural network for superposition processing, to obtain a first symbol

1303

Perform physical resource mapping on the first symbol, to obtain a first signal

First signal    1304

1305

Process the first signal, to obtain a data symbol

FIG. 13

Resource patch

n_L

$S_0$   $S_2$   $S_4$   D
               D

n_F   $S_1$   $S_3$   $S_5$   D
               D

n_T

FIG. 14

FIG. 15

Bitstream → Channel encoding → Modulation → Precoding → Resource patch mapping → Symbol superposition → Physical resource mapping → To-be-sent signal

FIG. 16

First communication apparatus

Second communication apparatus

First model information 1701

1702

Perform processing based on the first model information, to obtain a first neural network

FIG. 17

First communication apparatus

Second communication apparatus

Second level information 1801

1802

Send fourth indication information to the second communication apparatus based on the second level information

Fourth indication information

1803

The second communication apparatus and the first communication apparatus perform joint training to obtain a first neural network

FIG. 18

1900

1910          1920

Processing module

Transceiver module

Communication apparatus

FIG. 19

Communication
apparatus 200

2020

Transceiver

2010

Processor

2040

2030

Memory

FIG. 20

2102

Interface

2101

Logic circuit

Communication
apparatus 210

FIG. 21

<div style="text-align:center">**INTERNATIONAL SEARCH REPORT**</div>

| | International application No. |
|---|---|
| | **PCT/CN2023/084805** |

| | |
|---|---|
| **A.** | **CLASSIFICATION OF SUBJECT MATTER** |
| | H04L5/00(2006.01)i |

According to International Patent Classification (IPC) or to both national classification and IPC

| | |
|---|---|
| **B.** | **FIELDS SEARCHED** |

Minimum documentation searched (classification system followed by classification symbols)

    IPC: H04L

Documentation searched other than minimum documentation to the extent that such documents are included in the fields searched

Electronic data base consulted during the international search (name of data base and, where practicable, search terms used)

    CNTXT; CNABS; CNKI; VEN; WOTXT; USTXT; EPTXT; 3GPP: 徐晨, 张公正, 李榕, 颜敏, 杜颖钢, 华为, 数据, 符号, 导频, 混叠, 叠加, 混合, 相加, 功率, 比, 分配, 神经网络, 机器学习, 向量, pilot symbol, data symbol, alias, mix, blend, superposition, add, neural network, machine learning, power, ratio

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | CN 105164987 A (HUAWEI TECHNOLOGIES CO., LTD.) 16 December 2015 (2015-12-16) claims 14, 21, and 25-26, description, page 8, line 15 to page 23, line 21, and figure 2 | 1-74 |
| X | CN 101371547 A (NXP B.V.) 18 February 2009 (2009-02-18) description, page 4, lines 11 to 30 | 1-74 |
| A | CN 104160643 A (HUAWEI TECHNOLOGIES CO., LTD.) 19 November 2014 (2014-11-19) entire document | 1-74 |
| A | US 2012014417 A1 (HEATH JR ROBERT W; PANAH ALI YAZDAN;) 19 January 2012 (2012-01-19) entire document | 1-74 |
| A | EP 3334076 A1 (ALCATEL LUCENT) 13 June 2018 (2018-06-13) entire document | 1-74 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **26 June 2023** | **28 June 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/084805**

| Patent document cited in search report | | | Publication date (day/month/year) | Patent family member(s) | | | Publication date (day/month/year) |
|---|---|---|---|---|---|---|---|
| CN | 105164987 | A | 16 December 2015 | WO | 2015027517 | A1 | 05 March 2015 |
| CN | 101371547 | A | 18 February 2009 | WO | 2007083272 | A1 | 26 July 2007 |
| | | | | EP | 1980075 | A1 | 15 October 2008 |
| | | | | JP | 2009524278 | A | 25 June 2009 |
| | | | | US | 2010159914 | A1 | 24 June 2010 |
| | | | | US | 8315151 | B2 | 20 November 2012 |
| CN | 104160643 | A | 19 November 2014 | US | 2014369300 | A1 | 18 December 2014 |
| | | | | EP | 2823590 | A1 | 14 January 2015 |
| | | | | WO | 2014139550 | A1 | 18 September 2014 |
| US | 2012014417 | A1 | 19 January 2012 | US | 8514913 | B2 | 20 August 2013 |
| | | | | WO | 2012008973 | A1 | 19 January 2012 |
| | | | | JP | 2013537738 | A | 03 October 2013 |
| | | | | JP | 5557957 | B2 | 23 July 2014 |
| | | | | KR | 20130061715 | A | 11 June 2013 |
| | | | | KR | 101414036 | B1 | 01 July 2014 |
| EP | 3334076 | A1 | 13 June 2018 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210330405